# EUROPEAN PATENT APPLICATION

(11) **EP 3 605 304 A1**
(43) Date of publication of application: **05.02.2020**
(21) Application number: 18776749.6
(22) Date of filing: 09.02.2018
(51) Int. Cl.: G06F 3/0488, G06F 3/0354, G06F 3/041

(54) **TOUCH OPERATION DEVICE AND OPERATING METHOD AND OPERATING PROGRAM THEREFOR**

(30) Priority: 29.03.2017 JP 2017065951
(71) Applicant: FUJIFILM Corporation, Tokyo 106-8620 (JP)
(72) Inventor: OKABE, Yuki, Tokyo 107-0052 (JP); TSUKAMOTO, Naoki, Tokyo 107-0052 (JP); USAMI, Yoshihisa, Tokyo 107-0052 (JP); KITAGAWA, Yusuke, Tokyo 107-0052 (JP)
(74) Representative: Klunker IP Patentanwälte PartG mbB
(86) International application number: PCT/JP2018/004610
(87) International publication number: WO 2018/179906

(57) **Abstract**

A touch type operation apparatus and an operation method and an operation program of the same capable of preventing erroneous operations and implementing a simple and quick operation in a case where a mounting apparatus is in a specific operation state are provided.

A touchpad (13) includes a flat surface portion (40) and a protruding solid portion (41) having a hemispherical shape. An operation recognition part (75) and an operation validity determination part (76) are implemented in a touchpad control part (61). The operation recognition part (75) recognizes a gesture operation performed on an operation region of the touchpad (13). The operation validity determination part (76) determines only a rotating slide operation that is a slide operation with a finger along a lower periphery (41A) of the solid portion (41) as a valid operation while an automobile is in a state of manual driving.

## Description

### BACKGROUND OF THE INVENTION

### 1. Field of the Invention

The present invention relates to a touch type operation apparatus and an operation method and an operation program of the same.

### 2. Description of the Related Art

A touch type operation apparatus comprising a touch sensor has been widely used. The touch sensor includes an operation region in which a user performs a gesture operation by contact with a finger. Such a touch type operation apparatus is currently mounted in various apparatuses. For example, JP2013-022986A discloses a vehicle-mounted touch type operation apparatus. The touch type operation apparatus disclosed in JP2013-022986A comprises a touch sensor that includes an operation region having a generally flat surface shape.

The touch type operation apparatus disclosed in JP2013-022986A is equipped with a measure for preventing erroneous operations caused by unintended contact and the like of a finger with the operation region when an automobile is manually driven. Specifically, during the manual driving, an operation of which at least one of an operation intensity, the number of operations, the number of operation points (number of fingers in contact), an operation distance (distance of movement of the finger), or an operation time period (time period of contact with the finger) is increased compared to that during a vehicle stoppage is determined as a valid operation. For example, in the case of the operation intensity, an operation of lightly pressing the operation region is determined as a valid operation during the vehicle stoppage. However, an operation of strongly pressing the operation region is determined as a valid operation during the manual driving. In the case of the number of operations, an operation of tapping the operation region with one finger (operation of hitting the operation region with the finger) is determined as a valid operation during the vehicle stoppage. However, an operation of tapping the operation region with a plurality of fingers is determined as a valid operation during the manual driving.

### SUMMARY OF THE INVENTION

During the manual driving, it is assumed that a driver who is the user operates the touch sensor by groping without seeing the touch sensor. Thus, in the vehicle-mounted touch type operation apparatus, it is desirable that the operation region can be searched by groping without visually recognizing the reach of the driver during the manual driving, and a simple and quick operation is available in order to prevent the driver from taking attention away from driving by reducing a time period in which the driver releases a hand from a steering wheel.

In the touch type operation apparatus disclosed in JP2013-022986A, an operation of which the load exerted on the user is increased compared to that during the vehicle stoppage is determined as a valid operation during the manual driving. Thus, an effect of definitely preventing erroneous operations is achieved. However, since the operation region of the touch sensor has a generally flat surface shape, it is difficult to search for the operation region by groping. In addition, the operation of which the load exerted on the user is increased needs more load exerted at the fingertip than that in the case of the vehicle stoppage and may not be a simple and quick operation. Thus, the driver may take attention away from driving. Accordingly, in the touch type operation apparatus disclosed in JP2013-022986A, there is room for improvement in order to prevent erroneous operations and implement a simple and quick operation in the case of a specific operation state such as during the manual driving.

An object of the present invention is to provide a touch type operation apparatus and an operation method and an operation program of the same capable of preventing erroneous operations and implementing a simple and quick operation in a case where a mounting apparatus is in a specific operation state.

In order to resolve the above object, a touch type operation apparatus of the present invention comprises a touch sensor that includes an operation region in which a user performs a gesture operation by bringing a finger into contact with and a recessed solid portion and/or a protruding solid portion sensed by the contact with the finger is disposed in the operation region, an operation recognition part that recognizes the gesture operation performed on the operation region, and an operation validity determination part that determines whether or not the gesture operation recognized by the operation recognition part is a valid operation and determines the gesture operation as the valid operation only in a case where the gesture operation is a slide operation with the finger along a specific part of the solid portion while a mounting apparatus is in a specific operation state.

It is preferable that an operation lock of the touch sensor is released in response to the slide operation.

It is preferable that the operation region is configured to include a flat surface portion and the recessed solid portion recessed from the flat surface portion and/or the protruding solid portion protruding from the flat surface portion.

It is preferable that the specific part corresponds to an opening periphery of the recessed solid portion that is a boundary between the flat surface portion and the recessed solid portion and/or a recessed surface of the recessed solid portion. In addition, it is preferable that the specific part corresponds to a lower periphery of the protruding solid portion that is a boundary between the flat surface portion and the protruding solid portion and/or in a case where the protruding solid portion has an upper surface, a periphery of the upper surface.

Furthermore, it is preferable that the recessed solid portion includes a plurality of finger holes in which a plurality of the fingers are respectively inserted and a plurality of guide grooves guiding the plurality of fingers to the plurality of finger holes, respectively, and the specific part corresponds to recessed surfaces forming the guide grooves. In this case, it is preferable that a function executed in the mounting apparatus is changed depending on the number or positions of the finger holes in which the fingers are inserted.

It is preferable that the solid portion has any shape of a spherical shape, a columnar shape, or a frustum shape.

It is preferable that the touch type operation apparatus further comprises a voice output control part that performs control for outputting a notification voice with respect to the gesture operation from a speaker.

It is preferable that the touch sensor is a touch panel display of which at least a part is transparent and which has a display function in the transparent part.

It is preferable that the mounting apparatus is an automobile. In this case, it is preferable that the specific operation state is a state of manual driving where a driver sitting in a driver's seat of the automobile travels by manually operating a steering wheel. In addition, it is preferable that a function executed in the automobile is a function related to at least one of car navigation, car air conditioning, or car audio.

An operation method of a touch type operation apparatus of the present invention is an operation method of a touch type operation apparatus comprising a touch sensor that includes an operation region in which a user performs a gesture operation by bringing a finger into contact with and a recessed solid portion and/or a protruding solid portion sensed by the contact with the finger is disposed in the operation region. The method comprises an operation recognition step of recognizing the gesture operation performed on the operation region, and an operation validity determination step of determining whether or not the gesture operation recognized in the operation recognition step is a valid operation and determining the gesture operation as the valid operation only in a case where the gesture operation is a slide operation with the finger along a specific part of the solid portion while a mounting apparatus is in a specific operation state.

An operation program of a touch type operation apparatus of the present invention is an operation program of a touch type operation apparatus comprising a touch sensor that includes an operation region in which a user performs a gesture operation by bringing a finger into contact with and a recessed solid portion and/or a protruding solid portion sensed by the contact with the finger is disposed in the operation region. The program causes a computer to execute an operation recognition step of recognizing the gesture operation performed on the operation region, and an operation validity determination step of determining whether or not the gesture operation recognized in the operation recognition step is a valid operation and determining the gesture operation as the valid operation only in a case where the gesture operation is a slide operation with the finger along a specific part of the solid portion while a mounting apparatus is in a specific operation state.

According to the present invention, while the mounting apparatus is in the specific operation state, only the slide operation with the finger along the specific part of the recessed solid portion and/or the protruding solid portion disposed in the operation region of the touch sensor is determined as a valid operation. Thus, in a case where the mounting apparatus is in the specific operation state, the touch type operation apparatus and the operation method and the operation program of the same capable of preventing erroneous operations and implementing a simple and quick operation can be provided.

### BRIEF DESCRIPTION OF THE DRAWINGS

Fig. 1 is a conceptual diagram illustrating an overall configuration of a console system.
Fig. 2 is a diagram illustrating a map display screen.
Fig. 3 is a diagram illustrating the map display screen on which a menu bar is displayed.
Fig. 4 is a diagram illustrating a state where car audio volume is adjusted.
Fig. 5 is a diagram illustrating a state where a map is moved from a current location display.
Fig. 6 is a perspective exterior view of a touchpad including a protruding solid portion having a hemispherical shape.
Fig. 7 is a cross-sectional view of the touchpad.
Fig. 8 is a plan view of the touchpad.
Figs. 9A to 9D are descriptive diagrams of a method of manufacturing the touchpad.
Fig 10 is a descriptive diagram of a rotating slide operation.
Fig. 11 is a descriptive diagram of a tap operation.
Figs. 12A and 12B are descriptive diagrams of a stroke operation.
Figs. 13A and 13B are descriptive diagrams of a pinch-in operation and a pinch-out operation.
Figs. 14A and 14B are descriptive diagrams of a spread operation and a pick-up operation.
Figs. 15A and 15B are flowcharts illustrating a procedure of a gesture operation in the case of adjusting the volume during manual driving and a vehicle stoppage.
Fig. 16 is a block diagram of a console device control part and a main control device.
Fig. 17 is a block diagram of a touchpad control part.
Fig. 18 is a diagram illustrating operation recognition information.
Fig. 19 is a diagram illustrating operation validity determination information.
Figs. 20A and 20B are diagrams illustrating a process of an operation validity determination part.
Fig. 21 is a diagram illustrating operation command conversion information.
Fig. 22 is a flowchart illustrating a process procedure of the console system.
Fig. 23 is a perspective exterior view of a touchpad including a protruding solid portion having a cylindrical shape.
Fig. 24 is a perspective exterior view of a touchpad including a protruding solid portion having a circular frustum shape.
Fig. 25 is a perspective exterior view of a touchpad including a protruding solid portion having a quadrangular frustum shape.
Fig. 26 is a perspective exterior view of a touchpad including a recessed solid portion having a quadrangular frustum shape.
Fig. 27 is a perspective exterior view of a touchpad including a protruding solid portion having a hemispherical shape and a recessed solid portion having an annular shape.
Fig. 28 is a perspective exterior view of a touchpad including finger holes and guide grooves.
Fig. 29 is a diagram illustrating the operation command conversion information storing operation commands corresponding to the number of finger holes in which fingers are inserted.
Fig. 30 is a diagram illustrating the operation command conversion information storing operation commands corresponding to the positions of finger holes in which fingers are inserted.
Fig. 31 is a perspective exterior view illustrating a touchpad unit.
Fig. 32 is a perspective exterior view of a touch panel including a protruding solid portion having a hemispherical shape.
Fig. 33 is a block diagram of a console device control part of a second embodiment.
Fig. 34 is a table illustrating display contents of the touch panel depending on operations.
Fig. 35 is a perspective exterior view of a cleaner.
Fig. 36 is a plan view of an operation part of the cleaner and illustrates a state where a suction level is selected.
Fig. 37 is a plan view of the operation part of the cleaner and illustrates a state where an operation mode is selected.

### DESCRIPTION OF THE PREFERRED EMBODIMENTS

### [First Embodiment]

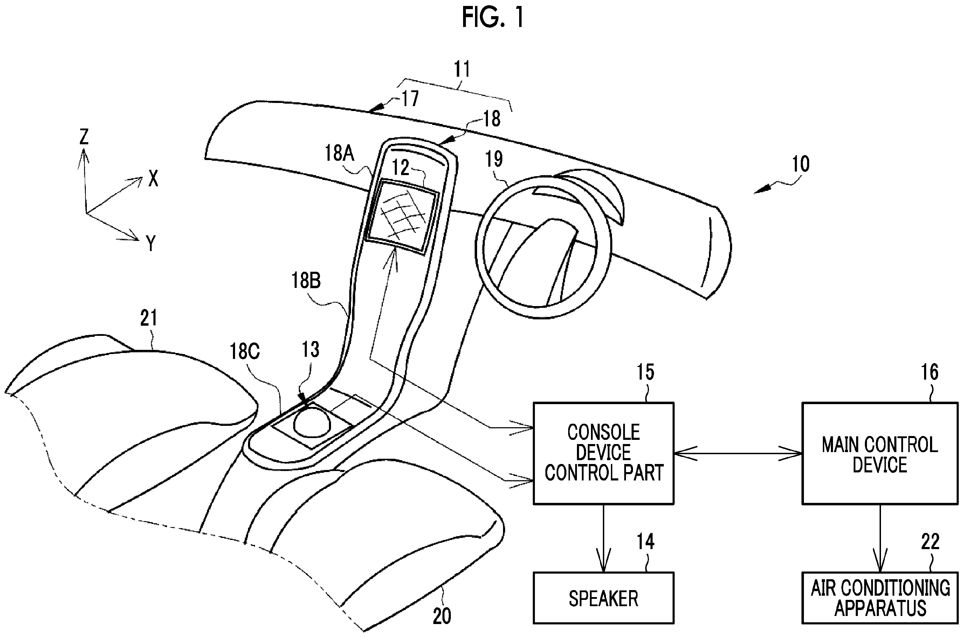

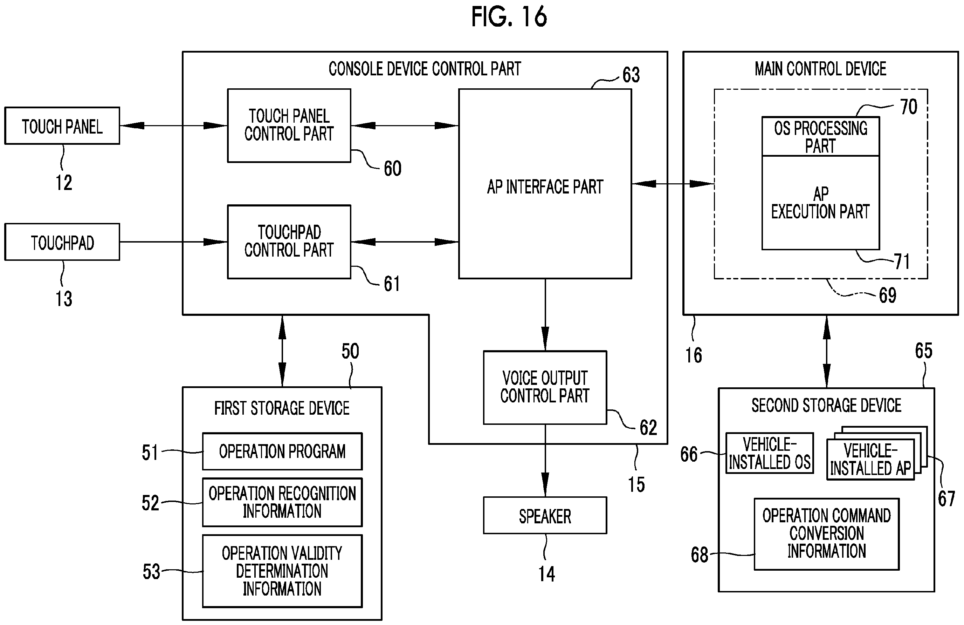

In Fig. 1, a console system 10 is embedded in an instrument panel 11 of an automobile corresponding to a mounting apparatus. The console system 10 is a system for operating various vehicle-installed APs 67 (refer to Fig. 16) such as a car navigation (hereinafter, abbreviated as car nav) application program (hereinafter, abbreviated as AP) providing guidance of a traveling route of the automobile, a car air conditioning AP controlling air conditioning in the automobile, and a car audio AP playing back music and videos. The console system 10 comprises a touch panel display (hereinafter, simply referred to as a touch panel) 12, a touchpad 13, a speaker 14, a console device control part 15, and a main control device 16.

The instrument panel 11 includes a dashboard 17 and a center console 18. The dashboard 17 extends in the direction of a Y axis (horizontal axis parallel to a width direction of the automobile) from a driver's seat 20 side on which a steering wheel 19 is arranged to a passenger seat 21 side. The center console 18 is arranged between the driver's seat 20 and the passenger seat 21 and is composed of an upper portion 18A, a center portion 18B, and a lower portion 18C.

The upper portion 18A is connected to a center portion of the dashboard 17. The center portion 18B includes a smooth curved surface that does not have a step and connects the upper portion 18A to the lower portion 18C. The upper portion 18A and the center portion 18B are slightly inclined to a front side of the automobile with respect to a Z axis that is a vertical axis. The lower portion 18C is folded at an approximately right angle from the center portion 18B and is approximately parallel to an X axis (horizontal axis parallel to a longitudinal direction of the automobile) that is orthogonal to the Y axis and the Z axis. The touch panel 12 is arranged in the upper portion 18A. The touchpad 13 is arranged in the lower portion 18C.

The touch panel 12 is one type of touch sensor as previously known and is composed of a display of a thin flat surface shape such as a liquid crystal display or an organic electroluminescence (EL) display, and a touchpad of a thin flat surface shape arranged on the display. The touch panel 12 displays various screens on the display and recognizes gesture operations performed by contact with a finger of a user on various screens. In the present embodiment, the user is a driver of the automobile sitting in the driver's seat 20.

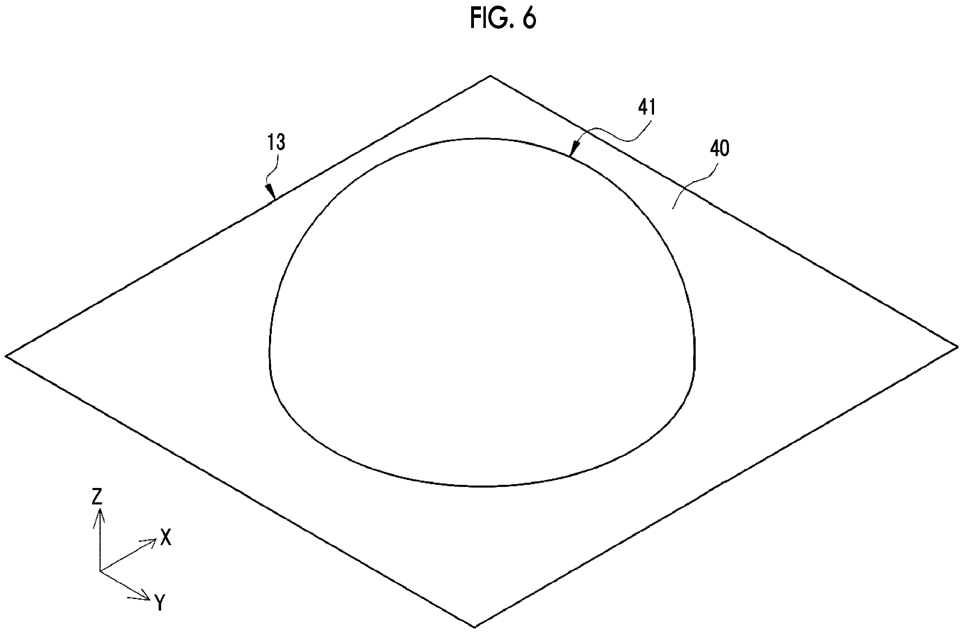

The touchpad 13 does not comprise a display function unlike the touch panel 12. However, the touchpad 13 is one type of touch sensor and recognizes the gesture operations in the same manner as the touch panel 12. As will be described in detail below, the touchpad 13 does not have a two-dimensional shape of a flat surface shape unlike the touch panel 12 and has a three-dimensional shape in which a solid portion 41 (refer to Fig. 6) is disposed.

For example, the speaker 14 is incorporated in the dashboard 17 and doors (not illustrated). The speaker 14 outputs various voices such as a guidance voice of the car nav AP, a playback voice of the car audio AP, and a notification voice with respect to the gesture operations performed through the touch panel 12 and the touchpad 13. The notification voice with respect to the gesture operations includes a sound effect indicating that the gesture operations are recognized, contents of functions executed in the vehicle-installed APs 67 in response to the gesture operations, and the like.

The console device control part 15 controls operation of console devices such as the touch panel 12, the touchpad 13, and the speaker 14. The main control device 16 is connected to the console device control part 15. The main control device 16 manages and controls operation of each part of the automobile including the console device control part 15.

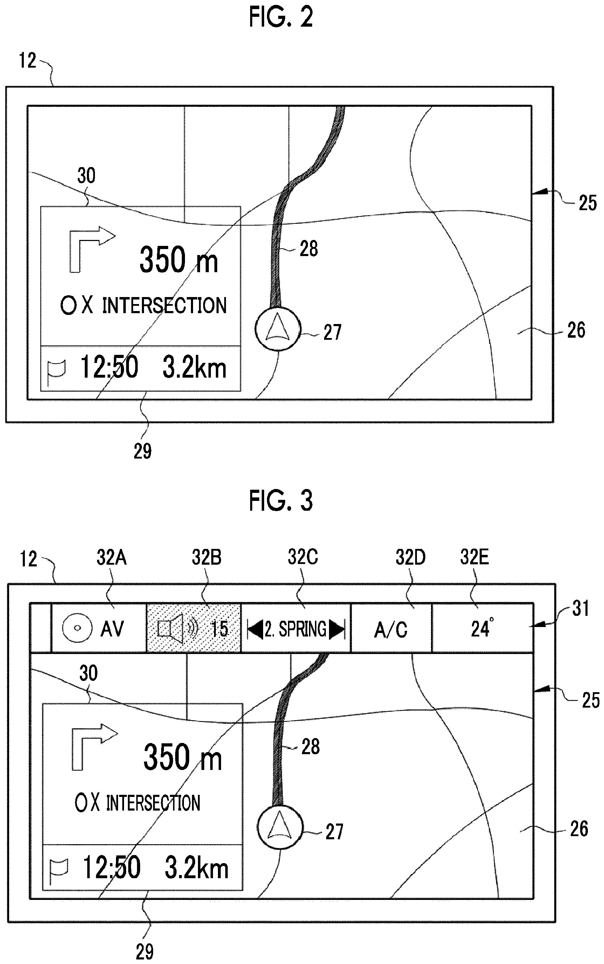

As previously known, the car nav AP displays the current location of the automobile calculated in a global positioning system (GPS; not illustrated) on a map or provides guidance of the traveling route to a set destination through the touch panel 12 (refer to Fig. 2 and the like). In addition, the car nav AP can provide congestion information, vacant parking lot information, surrounding store information, and the like.

The car nav AP supplies cold and warm blows into the vehicle from vents (not illustrated) formed in the dashboard 17 and the like and adjusts the temperature in the vehicle by starting an air conditioning apparatus 22 including a compressor and a heater.

The car audio AP plays back a television program and a radio program through the touch panel 12 and the speaker 14 or plays back music and videos recorded on recording media such as a compact disc (CD) and a digital versatile disc (DVD). In addition, the console system 10 comprises a terminal (auxiliary (AUX) terminal) (not illustrated) for connecting external apparatuses such as a portable music player. The car audio AP can play back music stored in the external apparatuses through the speaker 14.

Fig. 2 to Fig. 5 illustrate a map display screen 25 displayed on the touch panel 12. A map 26 provided by the car nav AP is displayed on the map display screen 25. In a default state, the map 26 illustrating a surrounding area within a set range with the current location of the automobile calculated in the GPS approximately at the center is displayed (hereinafter, referred to as a current location display).

As illustrated in the map display screen 25 in Fig. 2 to Fig. 4, in a case where the current location of the automobile is present in the surrounding area illustrated in the map 26, a current location mark 27 indicating the current location of the automobile is displayed. In addition, in a case where the destination is set, a traveling route 28 to the destination, first nav information 29 indicating an expected arrival time at the destination and a distance to the destination, second nav information 30 indicating a subsequent intersection at which a right turn or a left turn is made, and the like.

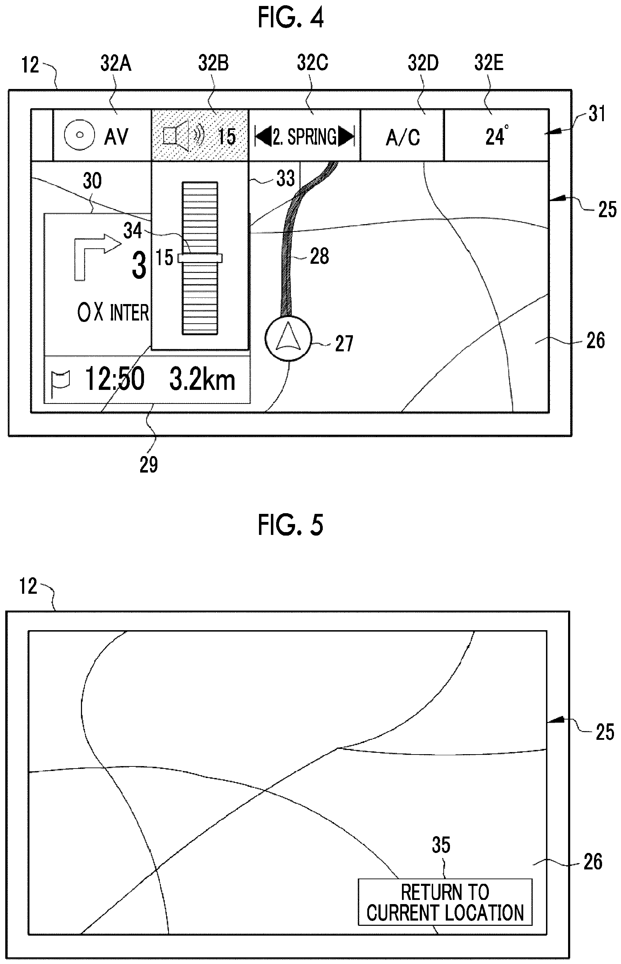

In Fig. 3 and Fig. 4, a menu bar 31 is inserted and displayed in an upper portion of the touch panel 12. The menu bar 31 has a long stripe shape in which a plurality of operation buttons 32A, 32B, 32C, 32D, and 32E corresponding to a plurality of menu items are arranged in a lateral direction.

The menu items correspond to various functions executed in the vehicle-installed APs 67 including the car nav AP, the car air conditioning AP, and the car audio AP. In Fig. 3 and Fig. 4, menu items corresponding to the function of the car audio AP are assigned to the operation buttons 32A to 32C, and menu items corresponding to the function of the car air conditioning AP are assigned to the operation buttons 32D and 32E. More specifically, an audio-visual (AV) menu is assigned to the operation button 32A. Volume adjustment is assigned to the operation button 32B. Music selection is assigned to the operation button 32C. An air conditioner (A/C) menu is assigned to the operation button 32D. Temperature adjustment is assigned to the operation button 32E. In Fig. 3 and Fig. 4, an operation button to which a menu item corresponding to the function of the car nav AP is not illustrated. But, the operation button is also disposed in the menu bar 31. Hereinafter, the plurality of operation buttons may be collectively referred to as operation buttons 32 unless distinction is necessary.

An illustration and a text indicating each menu item are displayed in the operation button 32. For example, an illustration resembling the speaker 14 and a number indicating a currently set volume value are displayed in the operation button 32B of the volume adjustment. In addition, a focus display identifiable from the other operation buttons 32 as illustrated by hatching is set on the operation button 32 (operation button 32B in Fig. 3 and Fig. 4) that is currently selected among the operation buttons 32.

The operation button 32A is a button for calling an AV menu screen (not illustrated) on which all functions executed in the car audio AP can be operated. In a case where the operation button 32A is selected, the AV menu screen is displayed on the touch panel 12.

The operation button 32B is a button for adjusting the volume. The operation button 32C is a button for fast forwarding or rewinding music being played back in the car audio AP, that is, for performing the music selection.

The volume adjustment function and the music selection function that can be operated by the operation button 32B and the operation button 32C are functions having a relatively high frequency of use among functions executed in the car audio AP. The volume adjustment function and the music selection function can also be operated from the AV menu screen. However, in that case, it is necessary to call the AV menu screen by selecting the operation button 32A and then, operate the volume adjustment and the music selection, thereby causing inconvenience. Thus, the operation button 32B and the operation button 32C are shortcut buttons that are dedicated disposed in order to directly access the volume adjustment function and the music selection function having a high frequency of use without passing through the AV menu screen.

The operation button 32D is a button for calling an A/C menu screen (not illustrated) on which all functions executed in the car air conditioning AP can be operated. In a case where the operation button 32D is selected, the A/C menu screen is displayed on the touch panel 12.

The operation button 32E is a button for adjusting a target temperature of the air conditioning apparatus 22. Like the volume adjustment function and the like, the temperature adjustment function is a function having a relatively high frequency of use among functions executed in the car air conditioning AP. Thus, like the operation button 32B and the like, the operation button 32E is a shortcut button for directly accessing the temperature adjustment function having a high frequency of use. While illustration is not provided, operation buttons dedicated to car air conditioning include a button for adjusting a blow amount of the cold and warm blows and a button for adjusting a blow direction of the cold and warm blows in addition to the operation button 32E.

While illustration is not provided, the operation button 32 for calling a nav menu screen (not illustrated) on which all functions executed in the car nav AP can be operated is arranged in the menu bar 31. In addition, the operation button 32 for calling a main menu screen (not illustrated) on which all functions executed in the vehicle-installed APs 67 including the car nav AP, the car air conditioning AP, and the car audio AP can be operated is arranged. Functions executed in the car nav AP include a viewpoint switching function for the map 26 such as a plan view and a bird's-eye view, a destination search function using a name, a telephone number, an address, or an accommodation category (for example, a gas station, a convenience store, and a hotel), an accommodation search function around the current location, and the like.

In Fig. 4, for example, in a case where the operation button 32B among the operation buttons 32 of the menu bar 31 is selected, a pull-down display of a volume adjustment bar 33 is set below the operation button 32B. The volume is adjusted by moving a cursor 34 of the volume adjustment bar 33 to a desired position. The same applies to a case where the operation button 32E for the temperature adjustment is selected.

Fig. 5 illustrates a state where the map 26 is moved from the current location display illustrated in Fig. 2 to Fig. 4. In this case, an operation button 35 for returning the map 26 to the current location display is displayed on the map display screen 25. A text representing a function of returning the map 26 to the current location display is displayed on the operation button 35. In a case where the operation button 35 is selected, the map 26 returns to the current location display. In the state illustrated in Fig. 5 where the map 26 is moved from the current location display, the first nav information 29 and the second nav information 30 are removed.

All of the movement of the map 26 in the map display screen 25, the switching between the display/non-display of the menu bar 31, the selection and selection confirmation operations for various operation buttons such as the operation button 32 and the operation button 35, the selection and setting operations for various functions through the AV menu screen, the A/C menu screen, the nav menu screen, and the main menu screen, and the like can be performed through the touch panel 12. In addition, the same operations as the touch panel 12 can be performed by the touchpad 13.

As illustrated in Fig. 6, the touchpad 13 has a three-dimensional shape in which a flat surface portion 40 and a protruding solid portion 41 protruding from the flat surface portion 40 are combined unlike the two-dimensional shape of the touch panel 12 in which the whole region of the operation region has a flat surface shape. The flat surface portion 40 has a rectangular shape, more specifically, a square shape. The solid portion 41 has a hemispherical shape obtained by dividing a sphere in half and is disposed at almost the center of the flat surface portion 40. The whole region including the flat surface portion 40 and an outer peripheral surface of the solid portion 41 is the operation region in which the user performs the gesture operations by contact with the finger. The hemispherical shape is not limited to a hemispherical shape obtained by exactly dividing the sphere in half and also includes 2/5 or 4/5 of five equally divided parts of the sphere.

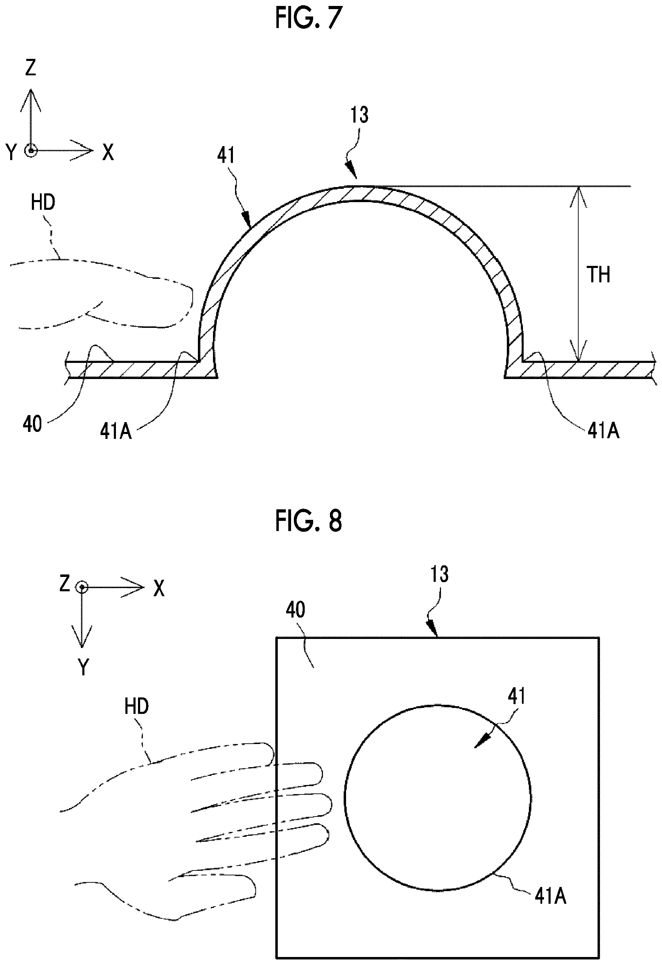

As illustrated in Fig. 7 and Fig. 8, a lower periphery 41A of the solid portion 41 that is a boundary between the flat surface portion 40 and the solid portion 41 is defined by a step TH that is formed between the flat surface portion 40 and the solid portion 41 and has a height corresponding to the solid portion 41. The step TH may have a height such that the boundary between the flat surface portion 40 and the solid portion 41 can be sensed by contact with a hand. Specifically, it is preferable that the step TH has a height greater than or equal to the thickness (approximately 10 mm) of the finger.

The touchpad 13 is an electrostatic capacitive type that can perform multipoint detection of detecting contact positions of a plurality of fingers in the operation region at the same time. For example, the touchpad 13 can be manufactured using the method disclosed in JP2016-213435A.

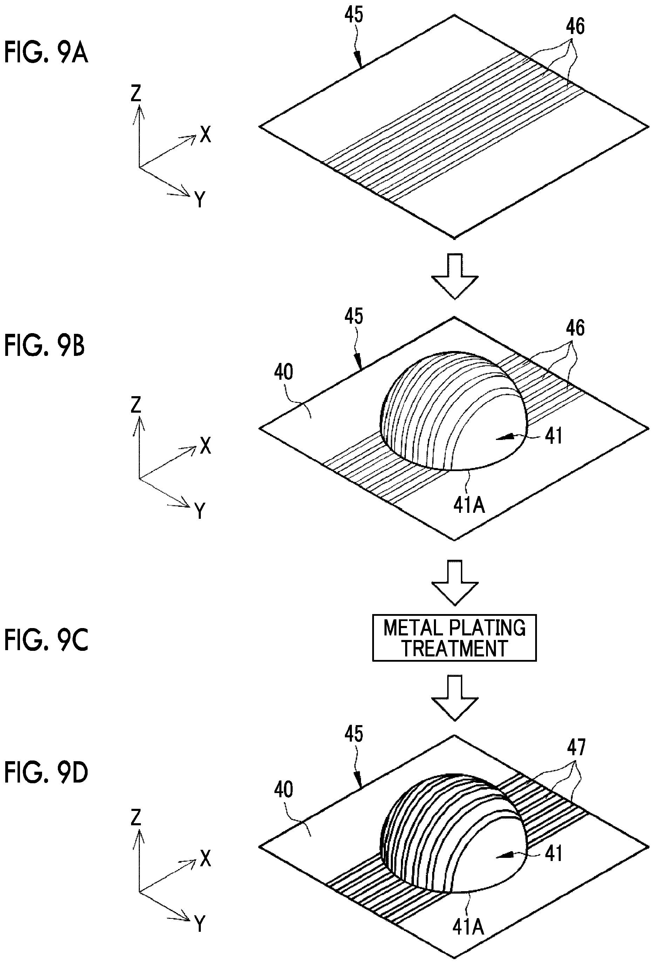

Details of the method of manufacturing the touchpad 13 are disclosed in JP2016-213435A. A summary is illustrated in Figs. 9A to 9D. First, in Fig. 9A, a plated layer 46 is formed in the whole region of the surface and the rear surface of a substrate 45 having a flat surface shape using a printing method such as screen printing (only a part of the plated layer 46 on the surface is illustrated in Fig. 9A). The plated layer 46 is a base of an electrode 47 (refer to Fig. 9D) for detecting the contact position of the finger.

The plated layer 46 on the surface is formed in a stripe shape in the X axis direction. The plated layer 46 on the rear surface is not illustrated but is formed in a stripe shape in the Y axis direction. Accordingly, the plated layer 46 is formed in a matrix shape on the surface and the rear surface of the substrate 45.

The substrate 45 is made of a transparent thermoplastic resin such as polyethylene terephthalate or polycarbonate. The plated layer 46 is a compound or a composition having a functional group that interacts with a plating catalyst and the like. For example, the functional group is exemplified by a carboxylic acid group and a cyano group.

After the plated layer 46 is formed, the solid portion 41 is formed by causing almost the center of the substrate 45 to protrude in a hemispherical shape using a thermal deformation method such as vacuum molding, blow molding, and thermal press molding as illustrated in Fig. 9B. Accordingly, the flat surface portion 40 and the solid portion 41, specifically, the lower periphery 41A of the solid portion 41 which is the boundary between the flat surface portion 40 and the solid portion 41, are defined.

Next, as illustrated in Fig. 9C, a metal plating treatment of immersing the deformed substrate 45 in a plating liquid such as copper is performed. By the metal plating treatment, the electrode 47 that is composed of a semi-transparent metal thin film (metal layer) is formed on the plated layer 46 as illustrated in Fig. 9D. The manufacturing of the touchpad 13 is completed by performing various treatments such as forming a surface protective layer and connecting various electronic components such as a signal processing integrated circuit (IC) with respect to the substrate 45 illustrated in Fig. 9D.

The metal layer generally has a small rupture elongation. Thus, in a case where the substrate 45 is deformed into a solid shape after disposing the metal layer on the substrate 45, the metal layer cannot follow the elongation of the substrate 45 and may be ruptured. In addition, while the metal layer may not be ruptured, the film thickness of the metal layer may be decreased due to the elongation of the metal layer following the substrate 45 in the case of deformation, and the resistance value of the metal layer is increased.

Meanwhile, in the manufacturing method illustrated in Figs. 9A to 9D, the substrate 45 on which the plated layer 46 is formed is deformed into a desired solid shape, and then, the metal layer is formed by performing the metal plating treatment. Thus, the rupture of the metal layer is prevented. In addition, the metal layer is not elongated following the deformation of the substrate 45, and the resistance value of the metal layer is not increased. Thus, the manufacturing method illustrated in Figs. 9A to 9D is effective as a manufacturing method of the touchpad 13 in which the solid portion 41 sensed by contact with the finger is disposed in the operation region.

A very low voltage is applied to the electrode 47 formed in a matrix shape. In a case where the finger of the user comes into contact with the operation region of the touchpad 13, an electrostatic capacitance changes at the contact position. A change in voltage corresponding to the change in electrostatic capacitance is detected, and the electrode 47 having the change in voltage is specified. Since the electrode 47 is arranged in a matrix shape, the electrode 47 in the X axis direction on the surface side and the electrode 47 in the Y axis direction on the rear surface side that intersect at the contact position of the finger are specified, and the contact position of the finger in the operation region is detected. In Figs. 9A to 9D, the electrode 47 is illustrated as having a relatively large width for convenience of description. In actuality, the width of the electrode 47 is very small. For example, considering a case where the substrate 45 is used as a touch panel comprising the display function (refer to a second embodiment), the electrode 47 has a very small width such that the opening ratio of display pixels of the touch panel is approximately 90%.

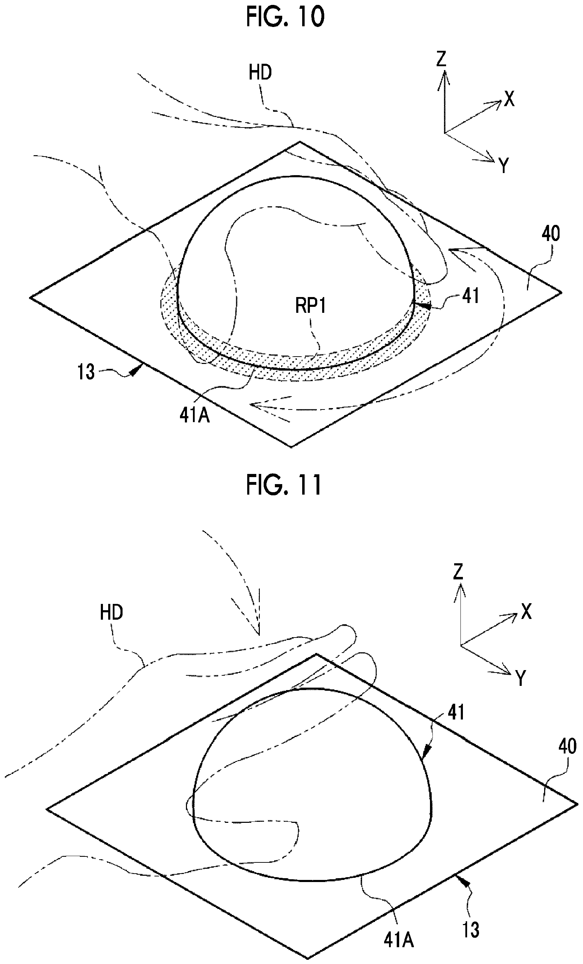

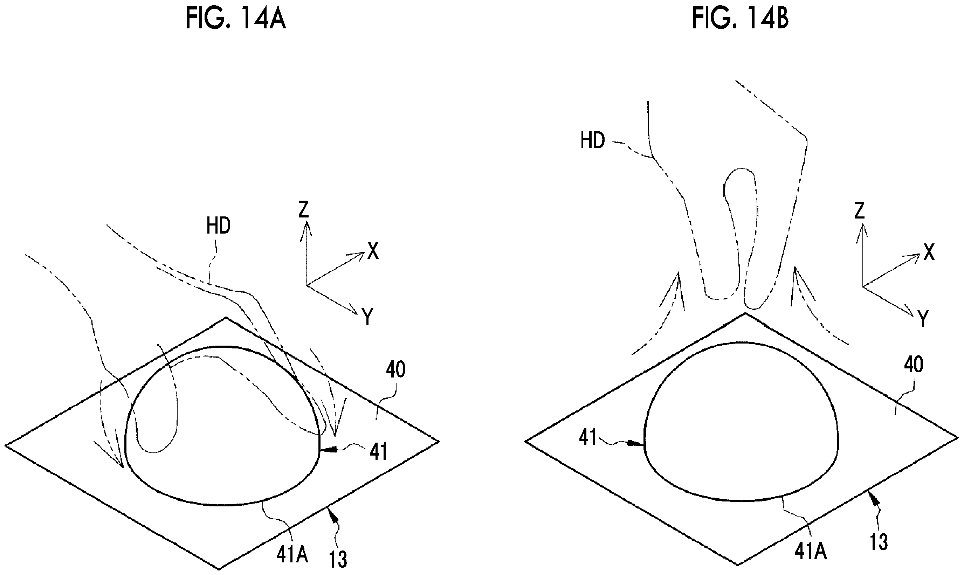

Fig. 10 to Figs. 14A and 14B illustrate representative gesture operations with respect to the touchpad 13. Fig. 10 is a gesture operation of bringing two or more fingers including an index finger and a thumb of a hand HD into contact with the lower periphery 41A, which is a specific part of the solid portion 41, from above in a grasping manner and in that state, rotationally moving the fingers leftward and rightward along the lower periphery 41A. Hereinafter, this gesture operation will be referred to as a rotating slide operation. In order to enable the rotating slide operation, the solid portion 41 is formed to have a size (for example, the step TH is less than or equal to approximately 90 mm) such that the solid portion 41 can be completely covered with the hand HD.

An operation lock that invalidates the gesture operation with respect to the operation region in a case where the automobile which is the mounting apparatus is in a specific operation state is set in the touchpad 13. In a case where the rotating slide operation is performed in a state where the operation lock is set, the operation lock is released, and the menu bar 31 is inserted and displayed in the upper portion of the touch panel 12. At the same time, the focus display of the operation button 32 is moved, and the operation button 32 (menu item) can be selected. In addition, the operation lock is released even in a case where the automobile is not in the specific operation state.

The specific operation state is a state of manual driving where the driver sitting in the driver's seat 20 travels by manually operating the steering wheel 19. The state of the manual driving is distinguished from automatic driving that will be commercially available in the near future. The automatic driving is a state where the operation and the like of the steering wheel 19 are automatically performed. This case is considered to be almost the same as a state of a vehicle stoppage. Thus, the state of the automatic driving is regarded as the state of the vehicle stoppage.

The rotating slide operation is a slide operation with the finger along the specific part of the solid portion 41 and is determined as the only valid gesture operation during the state of the manual driving. In the state of the manual driving, gesture operations such as the gesture operations illustrated in Fig. 11 to Figs. 14A and 14B other than the rotating slide operation are determined as invalid gesture operations.

In the state illustrated in Fig. 3 where the menu bar 31 is inserted and displayed in the upper portion of the touch panel 12, in a case where the rotating slide operation is stopped for a predetermined time period (for example, five seconds), the selection of the operation button 32 on which the focus display is currently set is confirmed. That is, the rotating slide operation doubles as an operation of confirming the selection of the operation button 32 of the menu bar 31. In the state of the manual driving, among the operation buttons 32, the operation button 32B of the volume adjustment function, the operation button 32C of the music selection function, the operation button 32E of the temperature adjustment function, and the like for relatively easy setting operations are set to be selectable. The operation button 32A for calling the AV menu screen, the operation button 32D for calling the A/C menu screen, and the like accompany relatively complicated setting operations and thus, are set to be non-selectable.

Furthermore, the rotating slide operation is performed in the case of the volume adjustment and the music selection of the car audio AP and the temperature adjustment, the blow amount adjustment, and the blow direction adjustment of the car air conditioning AP. For example, in the state illustrated in Fig. 4 where the operation button 32B is selected and the pull-down display of the volume adjustment bar 33 is set, the volume is increased in a case where the rotating slide operation is performed clockwise. The volume is decreased in a case where the rotating slide operation is performed counterclockwise.

In a case where the finger is separated from the touchpad 13 after the rotating slide operation, various displays and settings are finished. For example, in a case where the finger is separated from the touchpad 13 in a state where the menu bar 31 is displayed as illustrated in Fig. 3, the display of the menu bar 31 is canceled from the touch panel 12. In addition, in a case where the finger is separated from the touchpad 13 in a state where the volume adjustment bar 33 is displayed as illustrated in Fig. 4, the display of the volume adjustment bar 33 is canceled, and the volume currently selected by the cursor 34 is set.

In the rotating slide operation, in a strict sense, the finger structurally does not come into contact with the lower periphery 41A in a pinpoint manner. In the rotating slide operation, the finger may actually come into contact with a region RP1 that has a predetermined width and spreads in the flat surface portion 40 and the solid portion 41 from the lower periphery 41A as illustrated by hatching in Fig. 10. The region RP1 is preset considering the size of the solid portion 41 and the width of the finger. In a case where two or more fingers come into contact with the region RP1 and the fingers in contact are moved along the region RP1, this gesture operation is recognized as the rotating slide operation.

As described above, the gesture operations illustrated in Fig. 11 to Figs. 14A and 14B are determined as invalid operations during the state of the manual driving. In addition, those gesture operations are determined as invalid operations when the operation lock is set in the touchpad 13. However, the gesture operations illustrated in Fig. 11 to Figs. 14A and 14B are determined as valid operations during the vehicle stoppage.

Fig. 11 illustrates a gesture operation of hitting the surface of the solid portion 41 of the touchpad 13 with the finger. Hereinafter, this gesture operation will be referred to as a tap operation.

The tap operation has two types including a single tap operation of hitting the surface of the solid portion 41 once and a double tap operation of consecutively hitting twice. In a case where the single tap operation is performed in the state illustrated in Fig. 3 where the menu bar 31 is displayed, the selection of the operation button 32 on which the focus display is currently set is confirmed.

In a case where the double tap operation is performed in the state illustrated in Fig. 2 where the menu bar 31 is not displayed, the menu bar 31 is inserted and displayed in the upper portion of the touch panel 12. In addition, in a case where the double tap operation is performed after the display of the menu bar 31, the focus display of the operation button 32 is moved (operation button 32 is selected). Furthermore, in a case where the double tap operation is performed in a state where the map 26 is moved from the current location display and the operation button 35 is displayed as illustrated in Fig. 5, the operation button 35 is selected, and the map 26 returns to the current location display.

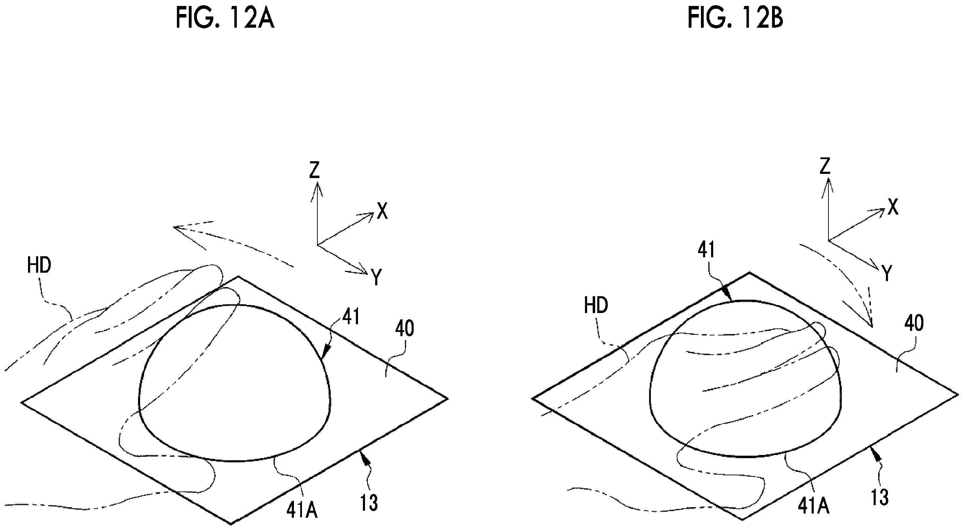

Figs. 12A and 12B illustrate a gesture operation of bringing one or more fingers including the index finger into contact with any position on the outer peripheral surface of the solid portion 41 and in that state, rubbing the outer peripheral surface of the solid portion 41 like moving the hand HD forward, backward, leftward, and rightward (only leftward and rightward movements are illustrated in Figs. 12A and 12B). Fig. 12A illustrates a state where the hand HD is moved to the left side. Fig. 12B illustrates a state where the hand HD is moved to the opposite right side. Hereinafter, this gesture operation will be referred to as a stroke operation.

In a case where the stroke operation is performed in a state where the map display screen 25 is displayed, the map 26 is moved. In addition, in a case where the stroke operation is performed after the display of the menu bar 31, the focus display of the operation button 32 is moved (operation button 32 is selected) like in the case of the double tap operation. The way of selecting the operation button 32 may be changed using the double tap operation and the stroke operation such that the focus display of the operation button 32 is moved in a skipping manner in the double tap operation, and the focus display of the operation button 32 is sequentially moved in the stroke operation.

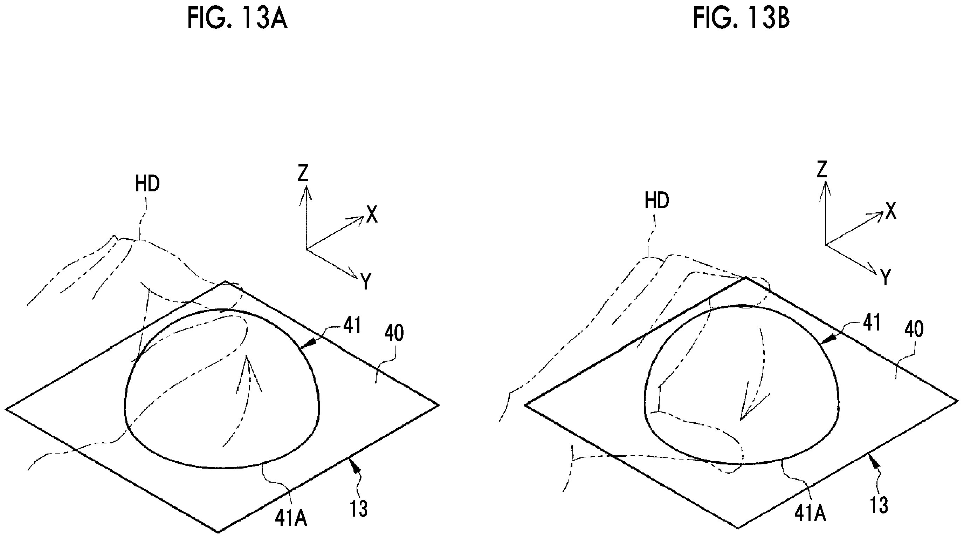

Figs. 13A and 13B illustrate a gesture operation of placing the index finger near the top point of the solid portion 41 and moving the thumb in upward and downward directions along the solid portion 41 with the index finger fixed. Fig. 13A illustrates a state where the thumb is moved in the upward direction toward the index finger. Fig. 13B illustrates a state where the thumb is moved in the downward direction away from the index finger. Hereinafter, the gesture operation in Fig. 13A will be referred to as a pinch-in operation. The gesture operation in Fig. 13B will be referred to as a pinch-out operation.

A pinch operation is performed in the case of the volume adjustment and the music selection of the car audio AP, the temperature adjustment of the car air conditioning AP, and the like. For example, in a case where the pinch-in operation is performed in the state illustrated in Fig. 4, the cursor 34 moves upward, and the volume is increased. In a case where the pinch-out operation is performed, the cursor 34 moves downward, and the volume is decreased.

Fig. 14A illustrates a case where the upper portion of the solid portion 41 is grasped with two or more fingers including the index finger and the thumb of the hand HD and the fingers are moved in the downward direction. Meanwhile, Fig. 14B illustrates a case where two or more fingers including the index finger and the thumb are brought into contact with a lower portion of the solid portion 41 and the fingers are moved in the upward direction like picking up the outer peripheral surface of the solid portion 41. Both of Fig. 14A and Fig. 14B illustrate the hand HD after moving the fingers, and a state before moving the fingers is not illustrated. However, the state before moving the fingers in Fig. 14A is exactly the state illustrated in Fig. 14B, and the state before moving the fingers in Fig. 14B is exactly the state illustrated in Fig. 14A. Hereinafter, the gesture operation in Fig. 14A will be referred to as a spread operation. The gesture operation in Fig. 14B will be referred to as a pick-up operation.

In a case where the spread operation is performed in a state where the map display screen 25 is displayed, a display range of the map 26 is enlarged. In a case where the pick-up operation is performed, the display range of the map 26 is reduced. In addition, the pick-up operation is performed in the case of providing instructions to finish various displays and settings. For example, in a case where the pick-up operation is performed in a state where the menu bar 31 is displayed as illustrated in Fig. 3, the display of the menu bar 31 is canceled from the touch panel 12. In addition, in a case where the pick-up operation is performed in a state where the volume adjustment bar 33 is displayed as illustrated in Fig. 4, the display of the volume adjustment bar 33 is canceled, and the volume currently selected by the cursor 34 is set.

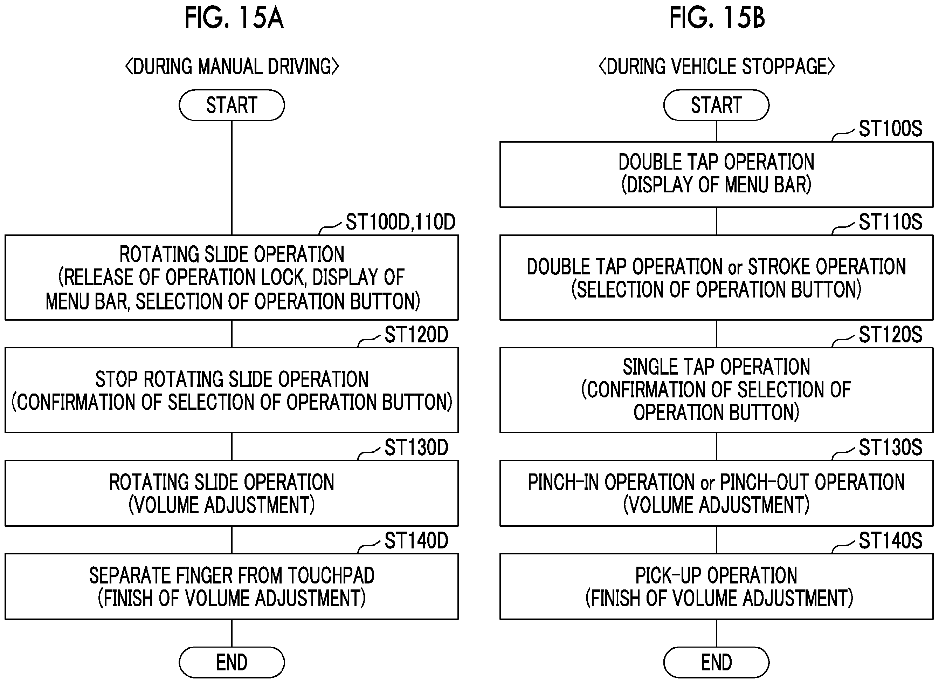

Figs. 15A and 15B illustrate examples of a procedure of gesture operations during the manual driving and the vehicle stoppage. A case of performing the volume adjustment of the car audio AP will be illustratively described.

During the manual driving illustrated in Fig. 15A, first, as illustrated in steps ST100D and ST110D, the release of the operation lock of the touchpad 13, the display of the menu bar 31 on the touch panel 12, and the selection of the operation button 32B of the volume adjustment function are performed by the rotating slide operation. The selection of the operation button 32B is confirmed by stopping the rotating slide operation for a predetermined time period (step ST120D). Accordingly, the pull-down display of the volume adjustment bar 33 is set as illustrated in Fig. 4, and the volume adjustment is enabled.

Next, the rotating slide operation is further performed. Accordingly, the cursor 34 moves, and the volume adjustment is performed (step ST130D). The user separates the finger from the touchpad 13 after setting a preferred volume. Accordingly, the volume adjustment is finished. The display of the volume adjustment bar 33 is canceled, and the volume currently selected by the cursor 34 is set (step ST140D). During the manual driving, only the rotating slide operation is a valid operation. Thus, the gesture operations from the release of the operation lock to the finish of the volume adjustment are performed by only the rotating slide operation.

During the manual driving, the notification voice is output from the speaker 14. For example, in steps ST100D and ST110D, the notification voice such as "Operation lock is released. Menu bar will be displayed." and "Selecting volume adjustment function." is output. In addition, in steps ST120D and ST130D, the notification voice such as "Volume adjustment is enabled." and "Volume is 15." is output. Furthermore, in step ST140D, the notification voice such as "Volume is set to 20. Volume adjustment will be finished." is output.

During the vehicle stoppage illustrated in Fig. 15B, first, as illustrated in step ST100S, the display of the menu bar 31 on the touch panel 12 is performed by the double tap operation. Furthermore, as illustrated in step ST110S, the operation button 32B of the volume adjustment function is selected by the double tap operation or the stroke operation. The selection of the operation button 32B is confirmed by the single tap operation (step ST120S). Accordingly, the pull-down display of the volume adjustment bar 33 is set as illustrated in Fig. 4, and the volume adjustment is enabled.

Next, the pinch-in operation or the pinch-out operation is performed. Accordingly, the cursor 34 moves, and the volume adjustment is performed (step ST130S). The user performs the pick-up operation after setting a preferred volume. Accordingly, the volume adjustment is finished. The display of the volume adjustment bar 33 is canceled, and the volume currently selected by the cursor 34 is set (step ST140S).

During the vehicle stoppage, gesture operations other than the rotating slide operation are determined as valid operation. Thus, gesture operations from the display of the menu bar 31 to the finish of the volume adjustment are performed by a combination of gesture operations. During the vehicle stoppage, the notification voice may be output or not output from the speaker 14 like during the manual driving.

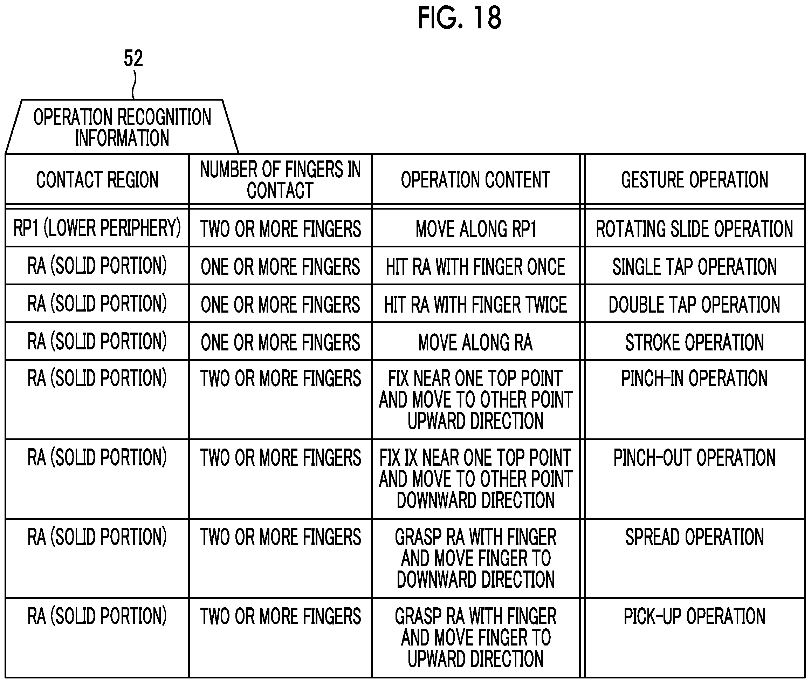

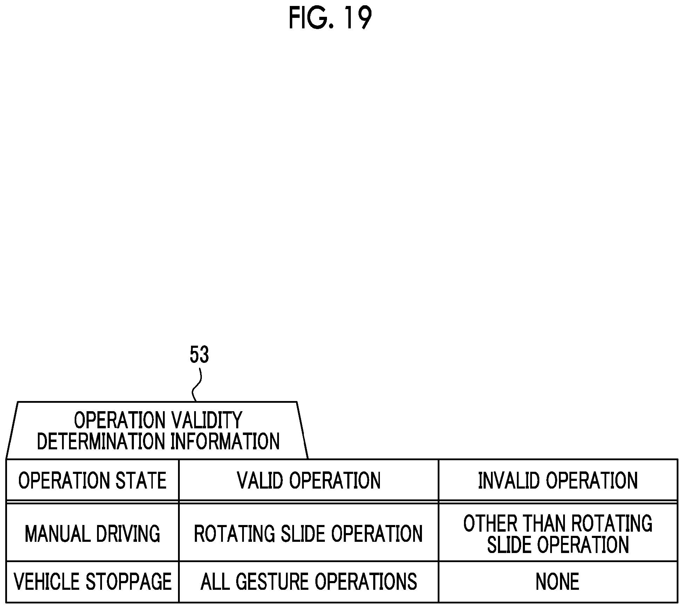

In Fig. 16, a first storage device 50 is connected to the console device control part 15. The first storage device 50 stores an operation program 51, operation recognition information 52 (refer to Fig. 18), and operation validity determination information 53 (refer to Fig. 19).

In a case where the operation program 51 is started, the console device control part 15 functions as a touch panel control part 60, a touchpad control part 61, a voice output control part 62, and an AP interface part 63.

The touch panel control part 60 recognizes the gesture operations with respect to various screens displayed on the touch panel 12. Information related to the recognized gesture operation (hereinafter, gesture information) is output to the AP interface part 63 as an operation instruction. Similarly, the touchpad control part 61 recognizes the gesture operation with respect to the operation region of the touchpad 13. In this case, the gesture information is also output to the AP interface part 63 as the operation instruction.

The AP interface part 63 transmits the gesture information from both of the control parts 60 and 61 to the main control device 16 and receives control information from the main control device 16. The control information is screen-related information such as update information for the map display screen 25, voice information such as the notification voice with respect to the gesture operation, operation state determination information indicating the operation state of the automobile, or operation lock control information for providing instructions to execute and release the operation lock of the touchpad 13.

In a case where the control information is the screen-related information, the AP interface part 63 outputs the control information to the touch panel control part 60. In a case where the control information is the voice information, the AP interface part 63 outputs the control information to the voice output control part 62. The touch panel control part 60 executes display control for various screens based on the screen-related information from the AP interface part 63. The voice output control part 62 outputs a voice based on the voice information from the AP interface part 63 from the speaker 14.

In addition, in a case where the control information includes the operation state determination information and the operation lock control information, the AP interface part 63 outputs the control information to the touchpad control part 61. The touchpad control part 61 determines the validity of the gesture operation with respect to the operation region of the touchpad 13 based on the operation state determination information and the operation lock control information from the AP interface part 63 and the operation validity determination information 53. The AP interface part 63 has an interface function of relaying the operation instruction (gesture information) necessary for executing the functions of various vehicle-installed APs 67 and the control information including the execution results of the functions of various vehicle-installed APs 67 between each of the control parts 60 to 62 and the main control device 16.

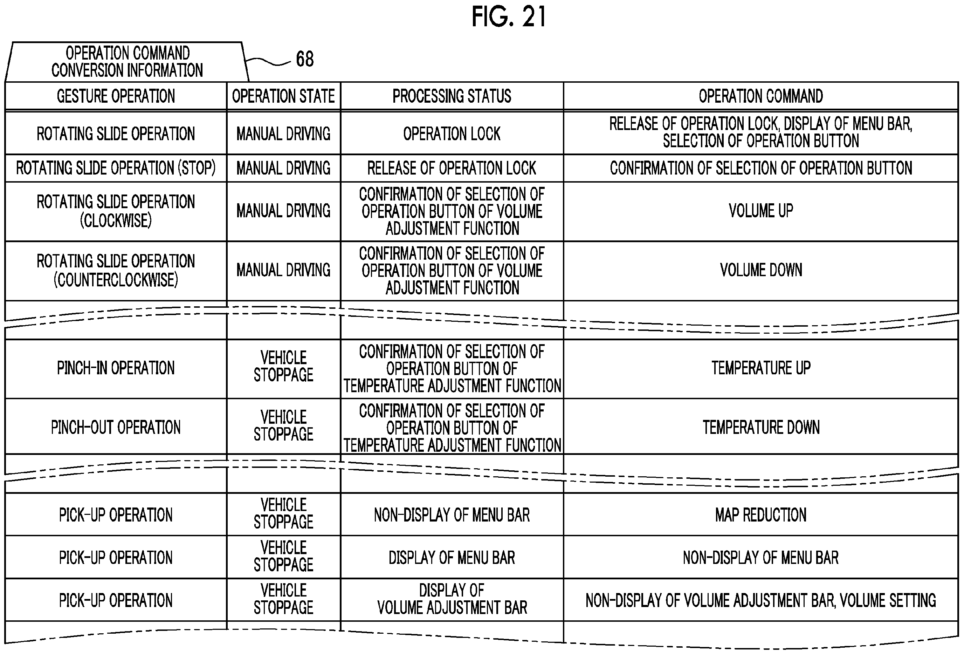

A second storage device 65 is connected to the main control device 16. The second storage device 65 stores a vehicle-installed operating system (OS) 66 and each vehicle-installed AP 67 including the car nav AP, the car air conditioning AP, and the car audio AP. In addition, the second storage device 65 stores operation command conversion information 68 (refer to Fig. 21). While illustration is not provided, the second storage device 65 also stores programs for controlling systems other than the console system 10 like a control program of a transmission such as a continuously variable transmission (CVT) and a control program of a collision avoidance system.

A central processing unit (CPU) 69 of the main control device 16 functions as an OS processing part 70 and an AP execution part 71 by loading and executing the vehicle-installed OS 66 and each vehicle-installed AP 67. The OS processing part 70 executes a process related to the vehicle-installed OS 66. The AP execution part 71 executes the function of each vehicle-installed AP 67 under monitoring of the OS processing part 70. The AP execution part 71 transmits the screen-related information and the voice information corresponding to the gesture information from the AP interface part 63 to the AP interface part 63 as the control information.

For example, the contents of the functions executed by the AP execution part 71 are as follows. First, a map (current location) display function, a viewpoint switching function, a destination search function, or an accommodation search function is executed as the function of the car nav AP. In addition, in a case where the destination is set, nav functions such as a search for the traveling route 28, a display of the searched traveling route 28, the first nav information 29, and the second nav information 30, and an output of the guidance voice are executed. The temperature adjustment function, a blow amount adjustment function, and a blow direction adjustment function are executed as the function of the car air conditioning AP. Furthermore, the AP execution part 71 executes various playback functions, the volume adjustment function, and a music selection function as the function of the car audio AP.

Among the plurality of functions, functions that are executed in response to the rotating slide operation include the volume adjustment function illustrated in Fig. 15A or the music selection function of the car audio AP and the temperature adjustment function, the blow amount adjustment function, and the blow direction adjustment function of the car air conditioning AP. The viewpoint switching function of the car nav AP may be executed in response to the rotating slide operation. The function executed in the automobile in response to the rotating slide operation which is a valid operation during the manual driving is a function related to at least one of car nav, car air conditioning, or car audio.

In the case of the car nav AP, the control information transmitted to the AP interface part 63 by the AP execution part 71 includes the map display screen 25 of the current location display, the map display screen 25 in which the map 26 is moved, enlarged, or reduced, the guidance voice, and the like. The control information in the case of the car air conditioning AP includes the map display screen 25 and the like of which the display is updated depending on the temperature adjustment, the blow amount adjustment, and the blow direction adjustment. The control information in the case of the car audio AP includes a video and a voice of the television program, a voice of the radio program, a voice of music, the map display screen 25 including the volume adjustment bar 33, and the like.

The OS processing part 70 supports multitasking and can cause the AP execution part 71 to execute the functions of different types of vehicle-installed APs 67. For example, during the execution of the nav function of the car nav AP, the playback function of the car audio AP can be executed, and furthermore, the temperature adjustment function of the car air conditioning AP can be executed.

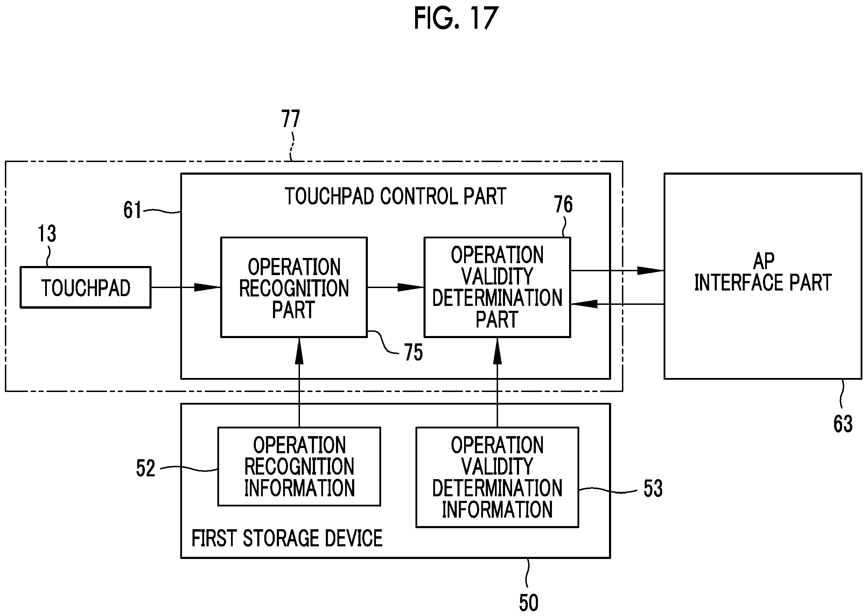

In Fig. 17, the touchpad control part 61 comprises an operation recognition part 75 and an operation validity determination part 76. That is, the touchpad control part 61 constitutes a touch type operation apparatus 77 according to an embodiment of the present invention along with the touchpad 13.

The operation recognition part 75 has an operation recognition function of recognizing the gesture operation performed on the operation region of the touchpad 13 based on a detection signal of the contact position of the finger from the touchpad 13 and the operation recognition information 52. The operation recognition part 75 outputs the gesture information related to the recognized gesture operation to the operation validity determination part 76.

The operation validity determination part 76 has an operation validity determination function of determining whether or not the gesture operation recognized in the operation recognition part 75 is a valid operation based on the operation state determination information and the operation lock control information transmitted from the main control device 16 through the AP interface part 63 and the operation validity determination information 53. The operation validity determination part 76 outputs the gesture information related to the gesture operation determined as a valid operation to the AP interface part 63 and does not output the gesture information related to the gesture operation determined as an invalid operation to the AP interface part 63.

In a case where the rotating slide operation is not performed during the manual driving of the automobile, the main control device 16 transmits the operation lock control information for providing an instruction to execute the operation lock. The operation validity determination part 76 receives the operation lock control information and executes the operation lock for determining only the rotating slide operation as a valid operation. That is, while the rotating slide operation is not recognized in the operation recognition part 75 in the state of the manual driving of the automobile, the operation validity determination part 76 determines an operation other than the rotating slide operation as an invalid operation even in a case where the operation is recognized.

In a case where the rotating slide operation is performed during the manual driving of the automobile, and in the case of the vehicle stoppage of the automobile, the main control device 16 transmits the operation lock control information for providing an instruction to release the operation lock. The operation validity determination part 76 receives the operation lock control information and releases the operation lock. That is, the operation validity determination part 76 has an operation lock release function in addition to the operation validity determination function.

In Fig. 18, the operation recognition information 52 stores the gesture operation corresponding to a set of a contact region of the finger in the operation region of the touchpad 13, the number of fingers in contact, and an operation content. The operation recognition part 75 refers to the operation recognition information 52 in order to search for the gesture operation corresponding to the set of the contact region, the number of fingers in contact, and the operation content obtained from the detection signal of the contact position of the finger from the touchpad 13. For example, in a case where the contact region is RP1 (lower periphery 41A) illustrated in Fig. 10, the number of fingers in contact is greater than or equal to two, and the operation content is a movement along RP1, the operation recognition part 75 recognizes the gesture operation as the rotating slide operation.

In a case where the gesture operation such as the rotating slide operation or the stroke operation is performed, the fingers of the user consecutively come into contact with a plurality of positions at intervals in the operation region of the touchpad 13. In this case, the detection signals representing the contact positions of the fingers are consecutively input into the operation recognition part 75. The operation recognition part 75 records a trajectory of the contact positions of the fingers, that is, a movement trajectory of the fingers, and recognizes the operation content from the recorded trajectory based on the consecutively input detection signals.

In Fig. 18, the whole region of the solid portion 41 is denoted by RA. In actuality, positional coordinate information related to each of the regions RP1 and RA is recorded in the contact region. For example, the positional coordinate information is a number assigned in order to the electrode 47 formed in a matrix shape in the X axis direction and the Y axis direction.

In Fig. 19, the operation validity determination information 53 stores a valid operation and an invalid operation during the manual driving and the vehicle stoppage. As described above, during the manual driving, the rotating slide operation is the only valid operation, and operations other than the rotating slide operation are invalid operations. In addition, during the vehicle stoppage, all gesture operations are valid operations, and invalid operations are apparently not present.

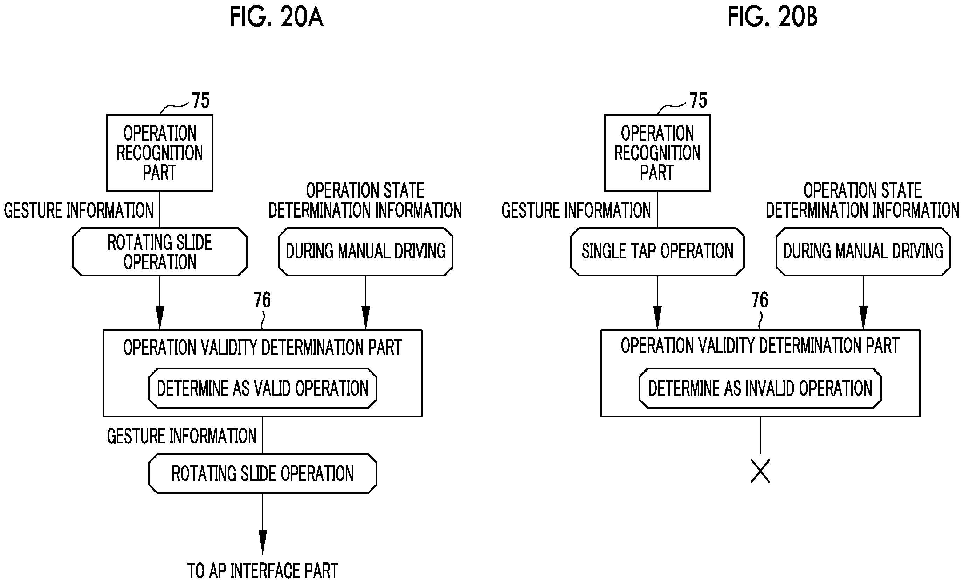

As illustrated in Fig. 20A, in a case where the gesture operation recognized in the operation recognition part 75 is the rotating slide operation, the operation validity determination part 76 determines the gesture operation as a valid operation while the automobile is in the state of the manual driving. The gesture information related to the rotating slide operation is output to the AP interface part 63. As illustrated in Fig. 20B, in a case where the gesture operation is other than the rotating slide operation (in Fig. 20B, the single tap operation), the operation validity determination part 76 determines the gesture operation as an invalid operation. In this case, the operation validity determination part 76 does not output the gesture information related to the gesture operation (single tap operation) to the AP interface part 63.

While the automobile is not in the state of the manual driving, that is, the automobile is in the state of the vehicle stoppage, all gesture operations are valid operations as illustrated in Fig. 19. Thus, the operation validity determination part 76 does not determine the validity of the gesture operation and passes the gesture information from the operation recognition part 75 to the AP interface part 63.

In Fig. 21, the operation command conversion information 68 stores an operation command with respect to each gesture operation in association with the operation state of the automobile and a processing status of the AP execution part 71. The operation command is obtained by converting each gesture operation into a form understandable by the AP execution part 71. The processing status is information indicating an operation status of the console system 10 such as the state of the operation lock, a display state of the map display screen 25, and an execution state of the function of each vehicle-installed AP 67 performed by the AP execution part 71.

Different operation commands are assigned to the gesture operations depending on the processing status. For example, in a state where the operation lock is executed, the display of the menu bar 31 and the selection of the operation button 32 are assigned to the rotating slide operation as the operation commands. In a state where the operation lock is released, the confirmation of the selection of the operation button 32 is assigned to the rotating slide operation as the operation command. Furthermore, in a state where the selection of the operation button 32B of the volume adjustment function is confirmed and the pull-down display of the volume adjustment bar 33 is set as illustrated in Fig. 4, an increase or decrease in volume is assigned as the operation command.

The OS processing part 70 has an operation state determination function of determining the operation state of the automobile and obtains the operation state of the automobile. More specifically, in a case where the speed of the automobile is equal to 0, the OS processing part 70 determines that the automobile is not in the state of the manual driving, that is, the automobile is in the state of the vehicle stoppage. In a case where the speed of the automobile exceeds 0, it is determined that the automobile is in the state of the manual driving. A pressure sensor may be disposed in the steering wheel 19. In a case where the driver holding the steering wheel 19 is detected by the pressure sensor and the speed of the automobile exceeds 0, it may be determined that the automobile is in the state of the manual driving.

In addition, the OS processing part 70 obtains the processing status by monitoring the AP execution part 71. The OS processing part 70 converts the gesture operation represented by the gesture information from the AP interface part 63 into the operation command based on the operation state of the automobile, the processing status, and the operation command conversion information 68. The OS processing part 70 provides the converted operation command to the AP execution part 71. The AP execution part 71 executes a function corresponding to the operation command provided from the OS processing part 70.

In Fig. 21, different types of operation commands of the vehicle-installed APs 67 such as map reduction of the car nav AP, the volume adjustment (increase or decrease in volume) of the car audio AP, and the temperature adjustment (increase or decrease in temperature) of the car air conditioning AP are collectively registered in one operation command conversion information 68. However, the operation command conversion information 68 may be present for each vehicle-installed AP 67.

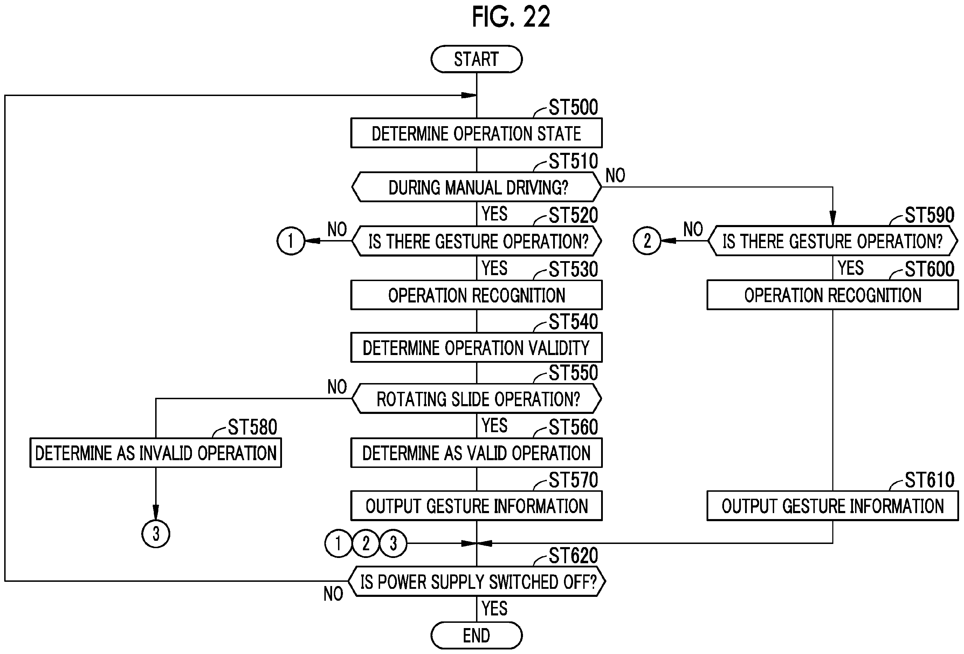

Hereinafter, an effect of the above configuration will be described with reference to the flowchart illustrated in Fig. 22. First, in a case where a power supply switch such as an ignition switch of the automobile is operated by the user and a power supply of the console system 10 is switched ON, the operation program 51 is started. Accordingly, as illustrated in Fig. 16, the console device control part 15 functions as each of the control parts 60 to 62 and the AP interface part 63. As illustrated in Fig. 17, the operation recognition part 75 and the operation validity determination part 76 are implemented in the touchpad control part 61 constituting the touch type operation apparatus 77.

In addition, the OS processing part 70 and the AP execution part 71 are implemented in the CPU 69 of the main control device 16. A map display function of the car nav AP is executed by the AP execution part 71. Accordingly, the map display screen 25 is displayed on the touch panel 12 as illustrated in Fig. 2.

After power is supplied, the operation state of the automobile is determined in the OS processing part 70 as illustrated in step ST500 in Fig. 22. In a case where it is determined that the operation state of the automobile is the state of the manual driving and the gesture operation is performed on the operation region of the touchpad 13 by the user (YES in both step ST510 and step ST520), the gesture operation is recognized in the operation recognition part 75 based on the detection signal of the contact position of the finger from the touchpad 13 and the operation recognition information 52 (step ST530; operation recognition step). The gesture information related to the gesture operation recognized in the operation recognition part 75 is output to the operation validity determination part 76.

In the operation validity determination part 76, a determination as to whether or not the gesture operation from the operation recognition part 75 is a valid operation is performed based on the operation validity determination information 53 (step ST540; operation validity determination step).

Specifically, in a case where the gesture operation from the operation recognition part 75 is the rotating slide operation (YES in step ST550), the gesture operation is determined as a valid operation in the operation validity determination part 76 as illustrated in Fig. 20A (step ST560). In this case, the gesture information related to the rotating slide operation is output to the AP interface part 63 from the operation validity determination part 76 (step ST570). In a case where the gesture operation from the operation recognition part 75 is other than the rotating slide operation (NO in step ST550), the gesture operation is determined as an invalid operation in the operation validity determination part 76 as illustrated in Fig. 20B (step ST580). In this case, nothing is output to the AP interface part 63 from the operation validity determination part 76.

In a case where the operation state of the automobile is not the state of the manual driving, that is, the operation state of the automobile is determined as the state of the vehicle stoppage, and the gesture operation is performed on the operation region of the touchpad 13 by the user (NO in step ST510 and YES in step ST590), the gesture operation is recognized in the operation recognition part 75 in the same manner as step ST530 (step ST600; operation recognition step).

In this case, the gesture information related to the gesture operation recognized in the operation recognition part 75 is output to the operation validity determination part 76, but the determination of the operation validity is not performed in the operation validity determination part 76. The gesture information from the operation recognition part 75 is passed to the AP interface part 63 from the operation validity determination part 76 (step ST610). This series of processes is repeated until the power supply is switched OFF (YES in step ST620).

In the main control device 16, the gesture operation represented by the gesture information from the AP interface part 63 is converted into the operation command in the OS processing part 70 based on the operation command conversion information 68 and is provided to the AP execution part 71. In the AP execution part 71, a function corresponding to the operation command is executed. Accordingly, the control information is transmitted to the AP interface part 63 from the AP execution part 71.

The control information is output to each of the control parts 60 to 62 from the AP interface part 63. Accordingly, for example, as illustrated in Fig. 4, the volume adjustment of the car audio AP is enabled by displaying the volume adjustment bar 33 on the map display screen 25, or the notification voice with respect to the gesture operation is output from the speaker 14. Alternatively, as illustrated in steps ST100D and ST110D in Fig. 15A, the release of the operation lock of the touchpad 13, the display of the menu bar 31 on the touch panel 12, and the selection of the operation button 32 are performed by the rotating slide operation.

While illustration is not provided, in a case where the gesture operation is not performed for a predetermined time period (for example, 30 seconds) after the operation lock is released in response to the rotating slide operation in the state of the manual driving, the operation lock is executed again.

The touchpad 13 comprises the protruding solid portion 41 that is sensed by contact with the finger. Thus, the user can recognize the part of the touchpad 13 in contact with the finger by groping without visually recognizing a proximal side of the user. For example, the flat surface portion 40 and the solid portion 41 can be definitely distinctively recognized. In addition, the lower periphery 41A which is the specific part of the solid portion 41 can be recognized distinctively from other parts of the solid portion 41.

Accordingly, the rotating slide operation of bringing two or more fingers into contact with the lower periphery 41A and in that state, rotationally moving the fingers leftward and rightward along the lower periphery 41A can be performed by groping without setting the touchpad 13 even during the manual driving. In addition, in a case where the lower periphery 41A is found with the finger, the rotating slide operation is performed by rotating the finger in contact with the lower periphery 41A. Thus, the rotating slide operation is a gesture operation causing a relatively low load. Furthermore, while the single tap operation of hitting the solid portion 41 once with the finger, the stroke operation of rubbing the solid portion 41 with the finger, and the like may be unintentionally operated by the user, the rotating slide operation is an operation that can only be intentionally performed by the user. Thus, the rotating slide operation is definitely distinguished from erroneous operations.

As described thus far, in a case where only the rotating slide operation is set as a valid operation in the state of the manual driving of the automobile as described in the present embodiment, erroneous operations can be prevented, and a simple and quick operation can be implemented in the state of the manual driving of the automobile.

In addition, the operation lock of the touchpad 13 is released in response to the rotating slide operation. In other words, the operation lock is executed until the rotating slide operation is performed, and an unintended gesture operation is determined as an invalid operation. Accordingly, erroneous operations can be more definitely prevented.

The notification voice with respect to the gesture operation is output from the speaker 14. Thus, without seeing the display of the touch panel 12, the user can perceive the selection and setting status set by the gesture operation of the user like whether or not the gesture operation of the user is correctly recognized.

In the vehicle-mounted touch type operation apparatus 77 as described in the present embodiment, it is expected that the touchpad 13 is operated by groping without setting the touchpad 13 during the manual driving. Thus, it is desirable that the touchpad 13 is configured to enable the driver who is the user to find the operation region by groping without visually recognizing the proximal side of the driver during the manual driving. In addition, it is desirable that the touchpad 13 is configured to enable a simple and quick operation in order to prevent the driver from taking attention away from driving by reducing a time period in which the driver releases the hand from the steering wheel 19. The present invention can meet all of the requirements. Accordingly, in a case where the mounting apparatus is the automobile and the specific operation state is the state of the manual driving, the present invention exhibits a particularly excellent effect.

While the operation state of the automobile is determined in the OS processing part 70 of the main control device 16, speed information related to the automobile may be transmitted to the console device control part 15 from the OS processing part 70, and the determination of the operation state may be performed in the console device control part 15.

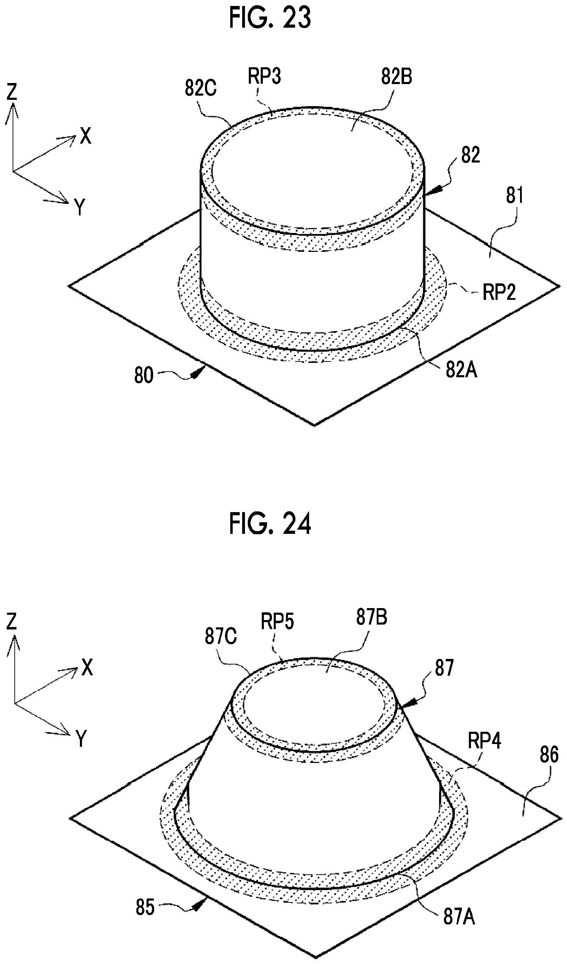

Fig. 23 to Fig. 28 illustrate modification examples of the touchpad. First, a touchpad 80 illustrated in Fig. 23 includes a flat surface portion 81 and a protruding solid portion 82. The solid portion 82 has a columnar shape, specifically, a cylindrical shape. In this case, the specific part corresponds to two parts including a lower periphery 82A of the solid portion 82 that is a boundary between the flat surface portion 81 and the solid portion 82, and a periphery 82C of an upper surface 82B of the solid portion 82. A region RP2 and a region RP3 are set in the lower periphery 82A and the periphery 82C of the upper surface 82B like the region RP1 illustrated in Fig. 10.

In this case, the slide operation has two types including the rotating slide operation with respect to the lower periphery 82A and the rotating slide operation with respect to the periphery 82C of the upper surface 82B. In this case, the release of the operation lock, the display of the menu bar 31, the selection of the operation button 32, and the confirmation of the selection of the operation button 32 are assigned to the rotating slide operation with respect to the lower periphery 82A as the operation commands. Meanwhile, the volume adjustment (increase or decrease in volume), the music selection, the temperature adjustment (increase or decrease in temperature), the blow amount adjustment, and the blow direction adjustment are assigned to the rotating slide operation with respect to the periphery 82C of the upper surface 82B as the operation commands.

A touchpad 85 illustrated in Fig. 24 includes a flat surface portion 86 and a protruding solid portion 87. The solid portion 87 has a frustum shape, specifically, a circular frustum shape. In this case, the specific part corresponds to two parts including a lower periphery 87A of the solid portion 87 that is a boundary between the flat surface portion 86 and the solid portion 87, and a periphery 87C of an upper surface 87B of the solid portion 87. In this case, a region RP4 is set in the lower periphery 87A, and a region RP5 is set in the periphery 87C of the upper surface 87B.

In this case, the slide operation has two types including the rotating slide operation with respect to the lower periphery 87A and the rotating slide operation with respect to the periphery 87C of the upper surface 87B. In this case, like the touchpad 80 in Fig. 23, different operation commands are assigned to the rotating slide operation with respect to the lower periphery 87A and the rotating slide operation with respect to the periphery 87C of the upper surface 87B.

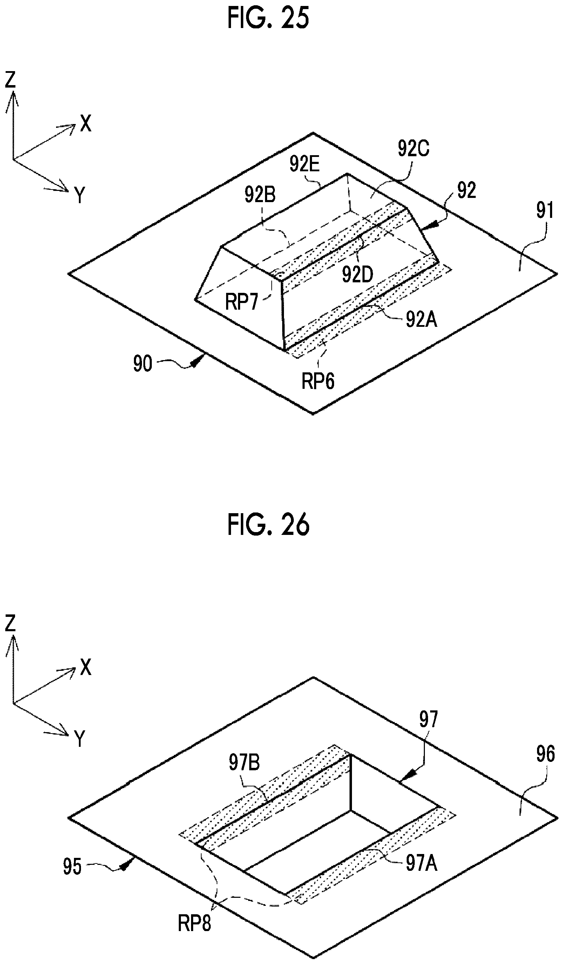

A touchpad 90 illustrated in Fig. 25 includes a flat surface portion 91 and a protruding solid portion 92. The solid portion 92 has a frustum shape, specifically, a quadrangular frustum shape that is long in the X axis direction. In this case, the specific part corresponds to two lower sides 92A and 92B that face each other in parallel to the X axis direction, which is the longitudinal direction of the solid portion 92, among sides constituting a lower periphery of the solid portion 92 which is a boundary between the flat surface portion 91 and the solid portion 92, and two upper edges 92D and 92E that face each other in parallel to the X axis direction among sides constituting a periphery of an upper surface 92C of the solid portion 92. In this case, the lower sides 92A and 92B are regarded as one specific part, and the upper sides 92D and 92E are regarded as one specific part. A region RP6 (only lower side 92A is illustrated) and a region RP7 (only upper side 92D is illustrated) are set on the lower sides 92A and 92B and the upper sides 92D and 92E.

In this case, the slide operation has two types of a lower slide operation and an upper slide operation. The lower slide operation is such that the lower sides 92A and 92B are interposed between two fingers (for example, the thumb and the index finger) and in that state, the two fingers are moved along the lower sides 92A and 92B (in the X axis direction). The upper slide operation is such that the upper sides 92D and 92E are interposed between two fingers (for example, the thumb and the index finger) and in that state, the two fingers are moved along the upper sides 92D and 92E (in the X axis direction). In this case, different operation commands are assigned to the lower slide operation and the upper slide operation.

As illustrated in the touchpads 80, 85, and 90 in Fig. 23 to Fig. 25, in a case where the protruding solid portion has an upper surface, the periphery of the upper surface may be set as the specific part instead of or in addition to the lower periphery. The specific part is not limited to one part and may correspond to a plurality of parts. In addition, in a case where the specific part corresponds to a plurality of parts, a different operation command may be assigned to the slide operation with respect to each specific part. The finger can be actually brought into contact with the peripheries 82C and 87C and the upper sides 92D and 92E unlike the lower periphery. Thus, the regions RP3, RP5, and RP7 may not be set.

In a case where the protruding solid portion has an upper surface like the touchpads 80, 85, and 90, it is preferable that a gesture operation of hitting the upper surface with the finger is recognized as the single tap operation or the double tap operation. However, like in the case of the touchpad 13, the tap operation of hitting the upper surface with the finger is determined as an invalid operation in the state of the manual driving. The tap operation is determined as a valid operation only in the state of the vehicle stoppage.

A touchpad 95 illustrated in Fig. 26 includes a flat surface portion 96 and a recessed solid portion 97 that is recessed from the flat surface portion 96. The solid portion 97 is a hole having an exactly reversed shape of the quadrangular frustum shape of the solid portion 92 which is long in the X direction in Fig. 25. In this case, the specific part corresponds to two upper sides 97A and 97B that face each other in parallel to the X axis direction, which is the longitudinal direction of the solid portion 97, among sides constituting an opening periphery of the solid portion 97 which is a boundary between the flat surface portion 96 and the solid portion 97. A region RP8 is set on the upper sides 97A and 97B. In this case, the slide operation is such that two fingers (for example, the index finger and the middle finger) are brought into contact with the upper sides 97A and 97B and in that state, the two fingers are moved along the upper sides 97A and 97B (in the X axis direction).

The solid portion does not necessarily protrude and may be recessed. The region RP8 may not be set for the upper sides 97A and 97B.

While the hole having a reversed shape of the solid portion 92 in Fig. 25 is formed as the recessed solid portion 97 in Fig. 26, a hole having a reversed shape of the solid portion 41 having a hemispherical shape illustrated in Fig. 6, the solid portion 82 having a cylindrical shape illustrated in Fig. 23, or the solid portion 87 having a circular frustum shape illustrated in Fig. 24 may be formed as the recessed solid portion.

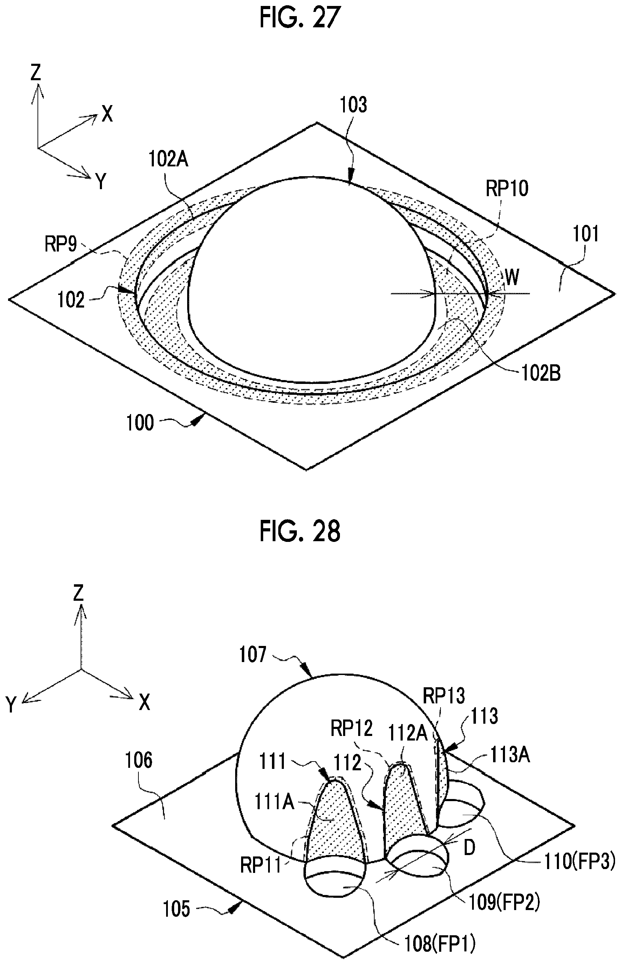

A touchpad 100 illustrated in Fig. 27 includes a flat surface portion 101, a recessed solid portion 102 that is recessed from the flat surface portion 101, and a protruding solid portion 103 that protrudes from the flat surface portion 101. The protruding solid portion 103 has a hemispherical shape like the solid portion 41 illustrated in Fig. 6. The recessed solid portion 102 is a groove having an annular shape obtained by carving the flat surface portion 101 with a same width W along the lower periphery of the solid portion 103. The width W of the solid portion 102 has a dimension (approximately 20 mm) in which the finger exactly fits.

In this case, the specific part corresponds to an opening periphery 102A of the solid portion 102 that is a boundary between the flat surface portion 101 and the solid portion 102, and a bottom surface 102B that is a recessed surface of the solid portion 102. A region RP9 is set on the opening periphery 102A, and a region RP10 is set in the bottom surface 102B. The region RP9 may not be set.

In this case, the slide operation has two types including an opening periphery rotating slide operation of bringing two fingers (for example, the index finger and the middle finger) into contact with the opening periphery 102A and in that state, rotationally moving the fingers leftward and rightward along the opening periphery 102A, and a bottom surface rotating slide operation of bringing two or more fingers including the index finger and the thumb into contact with the bottom surface 102B and in that state, rotationally moving the fingers leftward and rightward along the bottom surface 102B. In this case, different operation commands are assigned to the opening periphery rotating slide operation and the bottom surface rotating slide operation.

The recessed and protruding solid portions may be combined. In addition, in the recessed solid portion, the recessed surface may be set as the specific part instead of or in addition to the opening periphery. The recessed surface may be a side surface connecting the opening periphery 102A to the bottom surface 102B instead of or in addition to the illustrated bottom surface 102B.

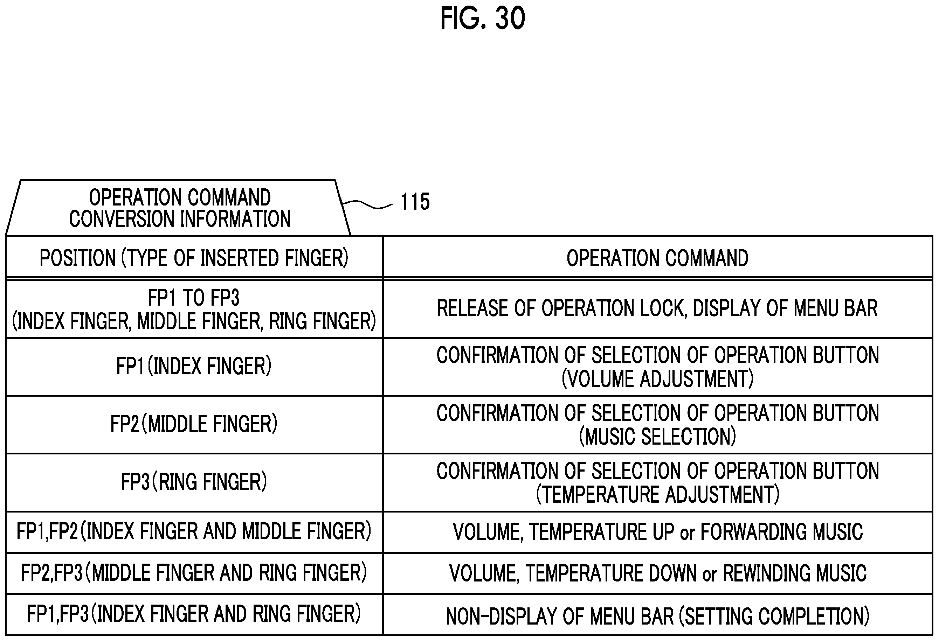

A touchpad 105 illustrated in Fig. 28 includes a flat surface portion 106, a protruding solid portion 107, three finger holes 108, 109, and 110 that are recessed solid portions, and three guide grooves 111, 112, and 113 that are recessed solid portions. The finger holes 108 to 110 have a circular shape and are formed in an arranged manner on an automobile front side of the lower periphery of the solid portion 107 having a hemispherical shape. The index finger is inserted in the finger hole 108. The middle finger is inserted in the finger hole 109. The ring finger is inserted in the finger hole 110. A diameter D (only the diameter D of the finger hole 109 is illustrated in Fig. 28) of the finger holes 108 to 110 has a dimension (approximately 20 mm) in which the finger exactly fits. In Fig. 28, FP1, FP2, and FP3 in parentheses after the reference signs of the finger holes are reference signs indicating the positions of the finger holes 108 to 110, respectively (also refer to Fig. 30).

The guide groove 111 guides the index finger to the finger hole 108. The guide groove 112 guides the middle finger to the finger hole 109. The guide groove 113 guides the ring finger to the finger hole 110. The guide grooves 111 to 113 are formed from a center portion to a lower portion on the automobile front side of the solid portion 107. Recessed surfaces 111A, 112A and 113A forming the guide grooves 111 to 113 has a tapered shape having a narrow upper portion and a wide lower portion. The recessed surfaces 111A, 112A, and 113A have the same width as the diameter D of the finger holes 108 to 110 in the lower portion connected to the finger holes 108 to 110.

In this case, the specific part corresponds to the recessed surfaces 111A to 113A forming the guide grooves 111 to 113. Regions RP11, RP12, and RP13 are set in the recessed surfaces 111A to 113A, respectively.

In addition, in this case, the slide operation is a guide groove slide operation of bringing the index finger the middle finger, and the ring finger into contact with the upper portions of the recessed surfaces 111A to 113A and in that state, moving the fingers downward along the recessed surfaces 111A to 113A and inserting the fingers in the finger holes 108 to 110. The guide groove slide operation is the image of performing the spread operation illustrated in Fig. 14A with the fingers along the guide grooves 111 to 113.

The recessed solid portion is configured to include the finger holes 108 to 110 in which the fingers are inserted, and the guide grooves 111 to 113 guiding the fingers to the finger holes 108 to 110. Thus, the solid portion is easily sensed by contact with the fingers and can be immediately found by groping. In addition, the guide groove slide operation is an operation that can only be intentionally performed by the user like the rotating slide operation and the like. Thus, the guide groove slide operation is definitely distinguished from erroneous operations.

While the guide grooves 111 to 113 are formed in the solid portion 107 in Fig. 28, the solid portion 107 may not be formed, and the guide grooves 111 to 113 may be formed in the flat surface portion 106.

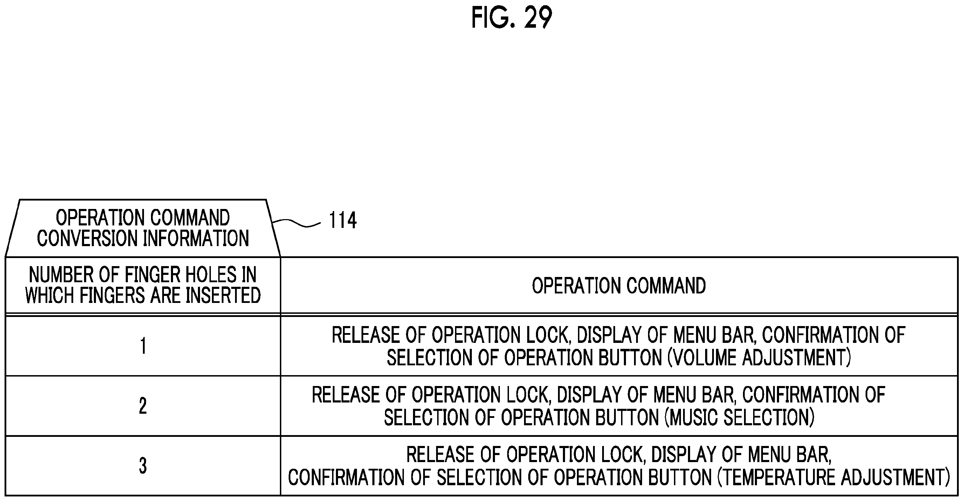

In the case of using the touchpad 105 illustrated in Fig. 28, the function executed in the AP execution part 71 may be changed depending on the number or positions of the finger holes 108 to 110 in which the fingers are inserted in the guide groove slide operation. Specifically, as illustrated in operation command conversion information 114 in Fig. 29, the selection of the operation button 32 is confirmed. In a case where the number of finger holes 108 to 110 in which the fingers are inserted is one, the selection of the operation button 32B of the volume adjustment function is confirmed. In a case where the number is two, the selection of the operation button 32C of the music selection function is confirmed. In a case where the number is three, the selection of the operation button 32E of the temperature adjustment function is confirmed. In either case, the release of the operation lock and the display of the menu bar 31 are set.

In this case, the increase or decrease in volume or temperature and the music selection are performed by the guide groove slide operation. For example, in a case where the guide groove slide operation is performed upward from the finger holes 108 to 110, the volume or the temperature is increased, or music is fast forwarded. Conversely, in a case where the guide groove slide operation is performed downward to the finger holes 108 to 110, the volume or the temperature is decreased, or music is rewound.

In a case where the number of finger holes 108 to 110 in which the fingers are inserted is one or two, the positions of the finger holes 108 to 110 in which the fingers are inserted are not considered. For example, the position at which the finger is inserted varies between a case where the index finger is inserted in only the finger hole 108 and a case where the ring finger is inserted in only the finger hole 110. However, since the number of finger holes in which the fingers are inserted is one, the selection of the operation button 32B of the volume adjustment function is confirmed in either case.

Operation command conversion information 115 illustrated in Fig. 30 is an example of changing the executed function depending on the positions of the finger holes 108 to 110 in which the fingers are inserted in the guide groove slide operation. First, as illustrated in the uppermost part, in a case where the index finger, the middle finger, and the ring finger are inserted in all of the finger holes 108 to 110 at the positions FP1 to FP3, the release of the operation lock and the display of the menu bar 31 are executed. The selection of the operation button 32 is confirmed such that in a case when the finger hole in which the finger is inserted in the subsequent guide groove slide operation is only the finger hole 108 (position FP1, index finger), the selection of the operation button 32B of the volume adjustment function is confirmed. In the case of only the finger hole 109 (position FP2, middle finger), the operation button 32C of the music selection function is confirmed. In the case of only the finger hole 110 (position FP3, ring finger), the selection of the operation button 32E of the temperature adjustment function is confirmed.

After the confirmation of the selection of the operation button 32, in a case where the finger hole in which the finger is inserted in the further subsequently performed guide groove slide operation corresponds to the finger holes 108 and 109 (positions FP1 and FP2, index finger and middle finger), the temperature is increased, or music is fast forwarded. Meanwhile, in the case of the finger holes 109 and 110 (positions FP2 and FP3, middle finger and ring finger), the temperature is decreased, or music is rewound. Furthermore, in a case where the finger hole in which the finger is inserted corresponds to the finger holes 108 and 110 (positions FP1 and FP3, index finger and ring finger), the menu bar is not displayed.

The executed function is changed depending on the number or positions of finger holes 108 to 110 in which the fingers are inserted. Thus, in a case where the number or positions of fingers inserted in the finger holes 108 to 110 are associated with the executed function in the user, a desired function can be directly executed by changing the number or positions of fingers inserted in the finger holes 108 to 110, and a more intuitive operation is enabled.

The number of finger holes in which the fingers are inserted and the executed function illustrated in Fig. 29 and the positions of the finger holes in which the fingers are inserted and the executed function illustrated in Fig. 30 are for illustrative purposes and do not particularly limit the present invention. In addition, the number of finger holes and guide grooves is not limited to three in the above example and may be four by adding a finger hole and a guide groove for the thumb or may be five by further adding a finger hole and a guide groove for the little finger.

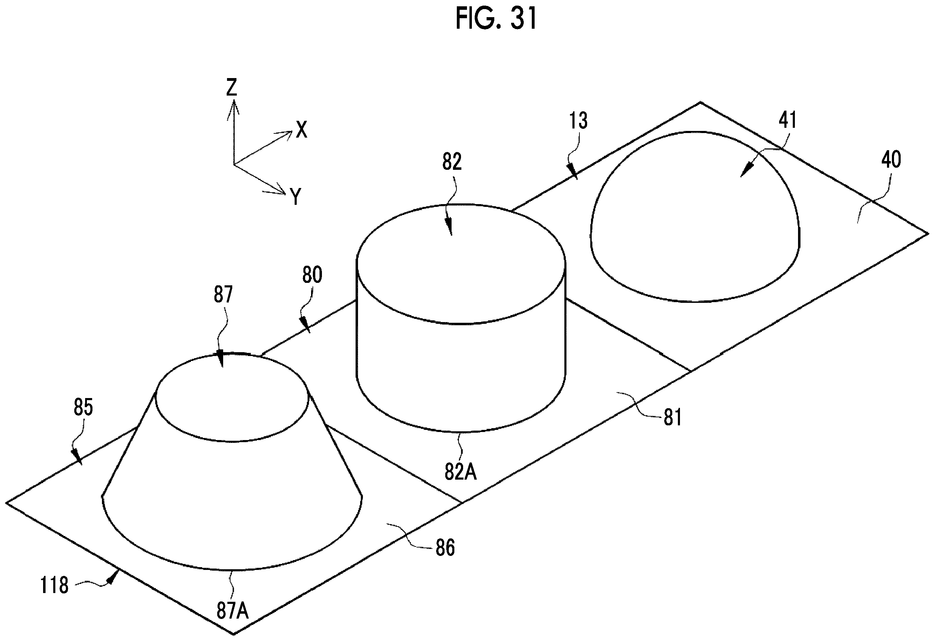

The number of touch sensors constituting the touch type operation apparatus is not limited to one and may be plural. For example, a touchpad unit 118 illustrated in Fig. 31 may be used.

In Fig. 31, in the touchpad unit 118, the touchpad 13 including the protruding solid portion 41 having a hemispherical shape illustrated in Fig. 6, the touchpad 80 including the protruding solid portion 82 having a cylindrical shape illustrated in Fig. 23, and the touchpad 85 including the protruding solid portion 87 having a circular frustum shape illustrated in Fig. 24 are arranged in the X axis direction.

In this case, for example, the touchpad 13 is dedicated to the operation of the car nav AP. The touchpad 80 is dedicated to the operation of the car air conditioning AP. The touchpad 85 is dedicated to the operation of the car audio AP. By doing so, the function of each vehicle-installed AP 67 can be executed with less effort. For example, in a case where the rotating slide operation is performed on the lower periphery 82A of the solid portion 82 of the touchpad 80 at the time of the operation lock, the release of the operation lock and the temperature adjustment can be executed. In a case where the rotating slide operation is performed on the lower periphery 87A of the solid portion 87 of the touchpad 85 at the time of the operation lock, the release of the operation lock and the volume adjustment can be executed.

While the touchpad unit 118 is configured to include the touchpads 13, 80, and 85 having different shapes of solid portions in Fig. 31, the touchpad unit 118 may be configured to include a plurality of touchpads having the same shape of solid portions.

### [Second Embodiment]

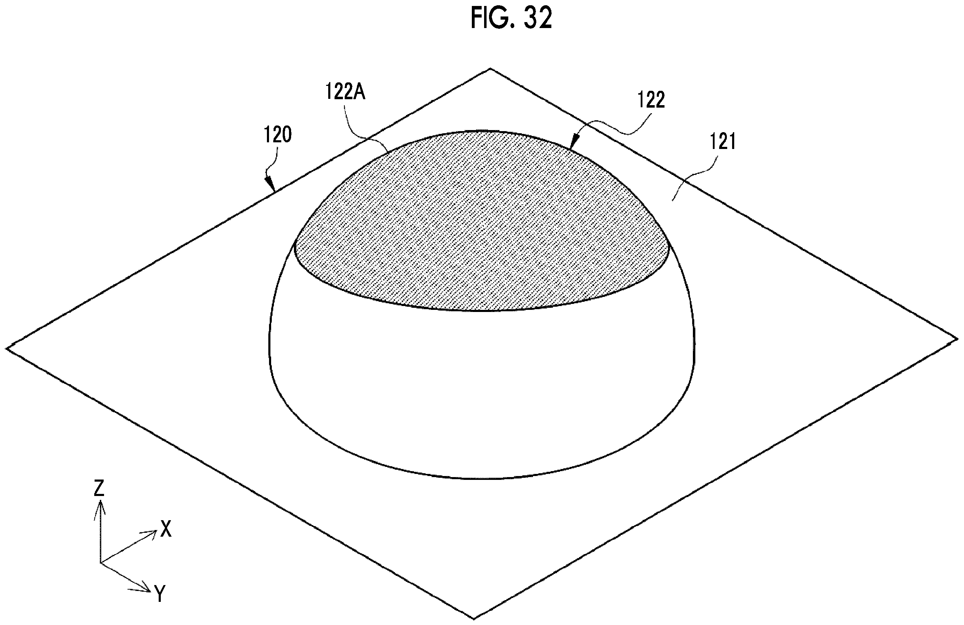

The touchpad that does not have the display function is illustrated as the touch sensor of the touch type operation apparatus in the first embodiment. In a second embodiment illustrated in Fig. 32 to Fig. 34, the touch panel is used as the touch sensor of the touch type operation apparatus.

As illustrated in Fig. 32, a touch panel 120 of the second embodiment is the same as the touchpad 13 illustrated in Fig. 6 in the first embodiment in terms of including a flat surface portion 121 and a protruding solid portion 122 having a hemispherical shape. However, the touch panel 120 is different from the touchpad 13 in that an upper portion 122A of the solid portion 122 is transparent, and the upper portion 122A which is a transparent part has the display function as illustrated by hatching.

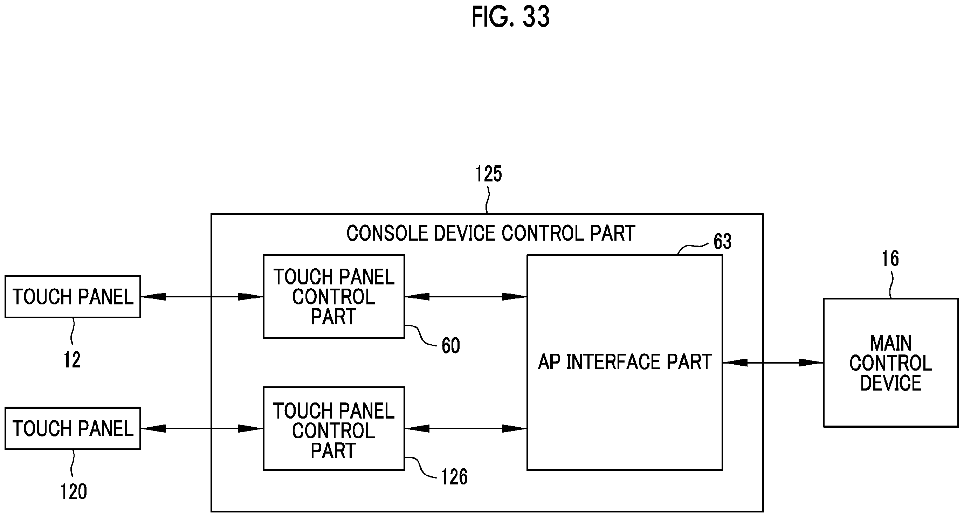

As illustrated in Fig. 33, a touch panel control part 126 is implemented in a console device control part 125 of the second embodiment instead of the touchpad control part 61. The touch panel control part 126 receives the control information indicating a display content of the upper portion 122A from the main control device 16 through the AP interface part 63 and performs display control of the upper portion 122A based on the received control information. The first storage device 50, the voice output control part 62, and the like are not illustrated in Fig. 33.

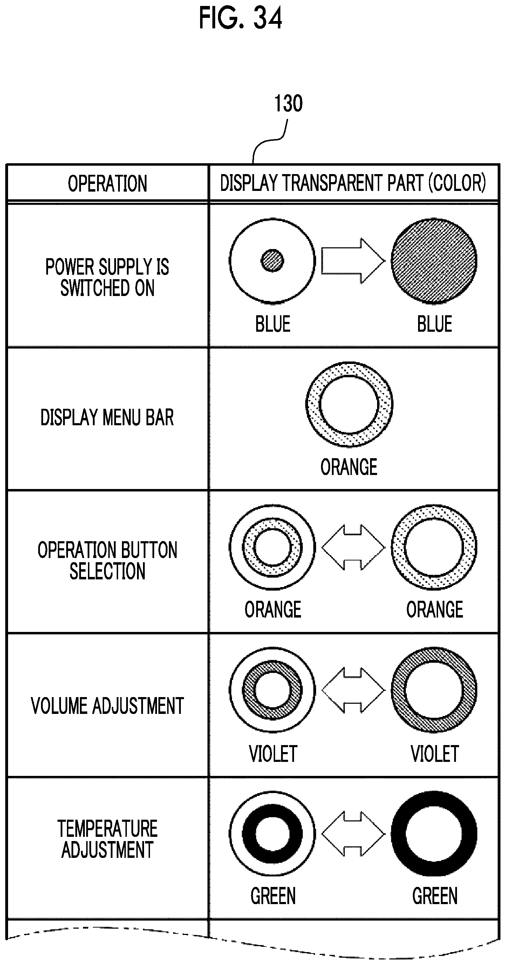

As illustrated in a table 130 in Fig. 34, the touch panel control part 126 changes the display content of the upper portion 122A depending on the operation. For example, in a case where the power supply of the console system 10 is switched ON, a small blue circle is displayed on the upper portion 122A, and then, the whole upper portion 122A is displayed in blue. In addition, an orange ring, a purple ring, and a green ring are displayed on the upper portion 122A by changing the size of the ring in the case of selecting the operation button 32 of the menu bar 31, the case of the volume adjustment, and the case of the temperature adjustment, respectively.

In a case where the touch sensor of the touch type operation apparatus is configured to include the touch panel 120, the display connected to the operation can be performed. During the manual driving, the driver operates the touch panel 120 by groping without seeing the touch panel 120. However, since the touch panel 120 is within the reach of the driver, the driver can perceive the touch panel 120 at a corner of the field of view of the driver. Accordingly, in a case where the touch sensor of the touch type operation apparatus is configured to include the touch panel 120 and the display connected to the operation is performed, the selection and setting status set by the gesture operation of the driver can be perceived. In addition, the driver can visually recognize that the gesture operation performed by the driver is definitely recognized.

Not only the upper portion 122A of the solid portion 122 may be set as the transparent part having the display function. The whole solid portion 122 may be set as the transparent part having the display function. In addition, the flat surface portion 121 may be set as the transparent part having the display function. Furthermore, the display content of the transparent part is not limited to circles or rings of different colors illustrated in Fig. 34. For example, an illustration and a text related to the content of the operation like an illustration resembling the speaker 14 and a number indicating the volume value may be displayed.

### [Third Embodiment]

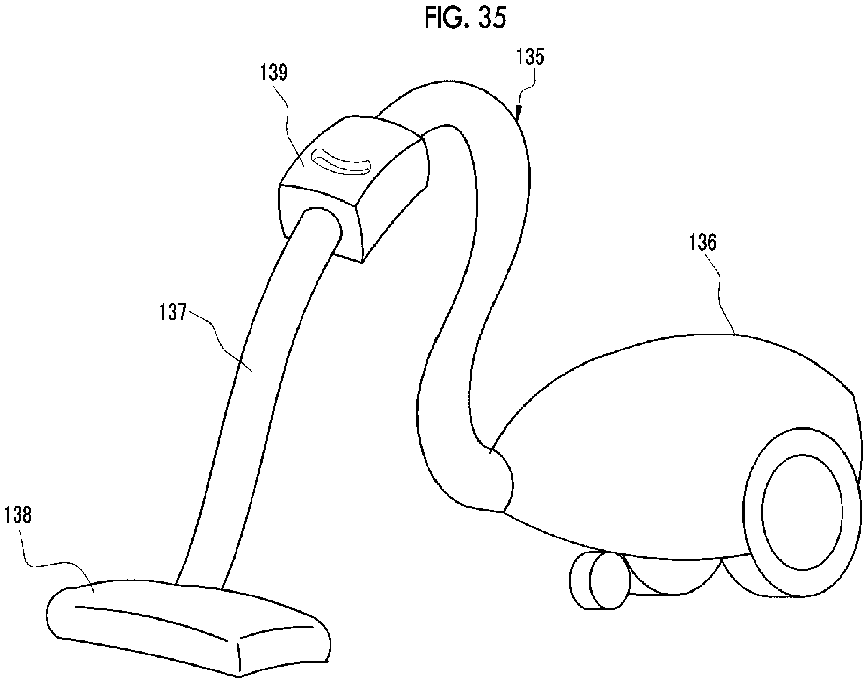

While the automobile is illustratively described as the mounting apparatus of the touch type operation apparatus in each embodiment, the present invention is not limited to the embodiment. For example, the mounting apparatus may be a cleaner 135 as will be described in a third embodiment illustrated in Fig. 35 to Fig. 37.

As illustrated in Fig. 35, the cleaner 135 comprises a main body portion 136 incorporating a suction motor (not illustrated) and a suction hose 137 extending forward from the main body portion 136. A suction head 138 is disposed at a tip end of the suction hose 137. An operation part 139 comprising a power supply switch and the like is disposed in the middle of the suction hose 137.

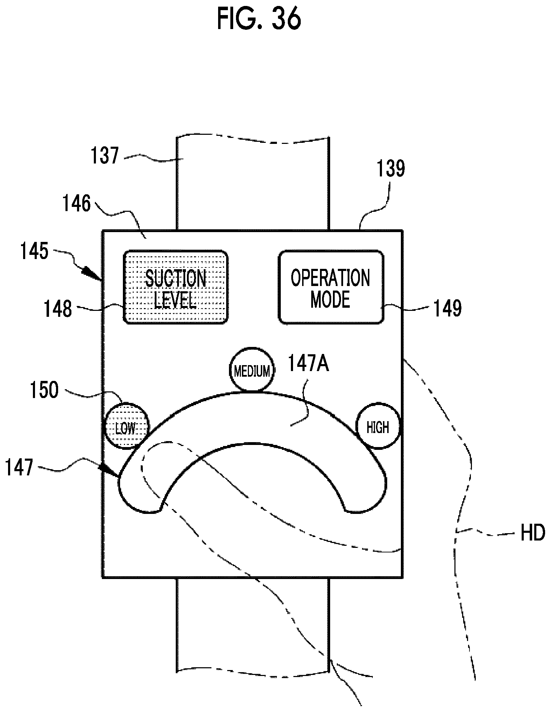

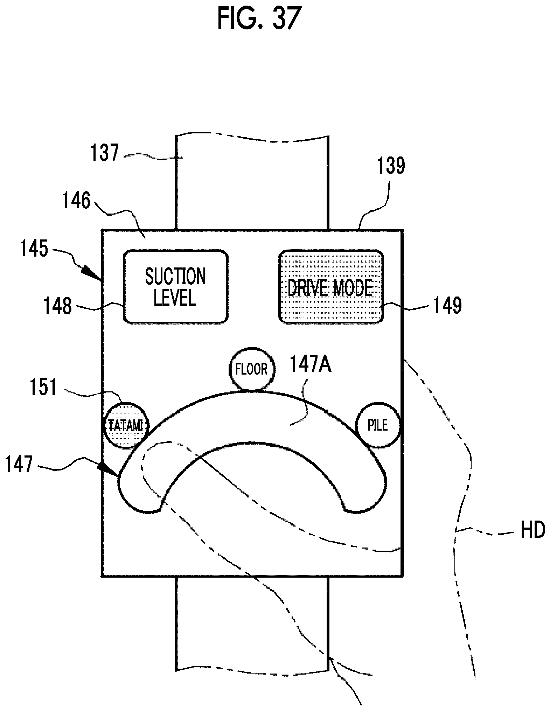

As illustrated in Fig. 36 and Fig. 37, the operation part 139 has a size such that the user can grasp the operation part 139 with the single hand HD. A touch panel 145 is disposed in the operation part 139 as the touch sensor of the touch type operation apparatus. The touch panel 145 constitute the touch type operation apparatus along with a touch panel control part (not illustrated) disposed in the main body portion 136 or the operation part 139. The operation of the touch panel 145 is controlled by the touch panel control part.

The touch panel 145 includes a flat surface portion 146 and a recessed solid portion 147. The whole region of an outer peripheral surface of the flat surface portion 146 and the solid portion 147 is the operation region. The solid portion 147 is a groove that has an arc shape having a width of a dimension (approximately 20 mm) in which the thumb exactly fits.

In this case, the specific part is a bottom surface 147A that is a recessed surface of the solid portion 147. The slide operation is an operation of bringing the thumb into contact with the bottom surface 147A and in that state, moving the thumb in an arc shape along the arc shape of the solid portion 147.

The flat surface portion 146 is the transparent part having the display function. Operation buttons 148 and 149 are displayed on the flat surface portion 146. The operation buttons 148 and 149 are buttons for selecting the function executed in the slide operation with respect to the solid portion 147. Specifically, the operation button 148 is a button for selecting a suction level adjustment function. The operation button 149 is a button for selecting an operation mode switching function of a suction operation. Fig. 36 illustrates a state where the operation button 148 is selected as illustrated by hatching. Fig. 37 illustrates a state where the operation button 149 is selected.

For example, the suction level can be adjusted in three levels of low, medium, and high. In a case where the operation button 148 is selected, an indicator 150 indicating the suction level is displayed near the solid portion 147 in the flat surface portion 146 as illustrated in Fig. 36. A focus display identifiable from other indicators 150 like lighting in red as illustrated by hatching is set on the indicator (indicator of the low suction level in Fig. 36) 150 of the currently selected suction level.

For example, three operation modes of tatami, floor (flooring), and pile (carpet) are prepared. In a case where the operation button 149 is selected, an indicator 151 indicating the operation mode is displayed near the solid portion 147 in the flat surface portion 146 as illustrated in Fig. 37 like the indicator 150 in Fig. 36. A focus display identifiable from other indicators 151 is set on the indicator (indicator of the tatami operation mode in Fig. 37) 151 of the currently selected operation mode like the indicator 150.

In the state illustrated in Fig. 36 where the operation button 148 is selected, the slide operation with respect to the solid portion 147 with the thumb is converted into an operation command for changing the suction level. In the state illustrated in Fig. 37 where the operation button 149 is selected, the slide operation with respect to the solid portion 147 with the thumb is converted into an operation command for changing the operation mode.

An operation state of the cleaner 135 after the power supply is switched ON includes two operation states of a stand state and a suction operation state. The standby state is a state where the power supply is switched ON and the operation buttons 148 and 149 and the like are displayed on the touch panel 145, but a start instruction for the suction operation is not provided. Accordingly, the suction motor does not rotate in the standby state. The suction operation state is a state where the start instruction for the suction operation is provided and the suction operation is performed by rotating the suction motor. An operation member that provides the start instruction and a stop instruction for the suction operation is not displayed as an operation button on the touch panel 145. For example, the operation member is disposed to be operable with the index finger and the like on the opposite surface of the touch panel 145 from the operation part 139.

In this case, the specific operation state is the suction operation state. In the suction operation state, the user of the cleaner 135 performs cleaning while seeing the suction head 138 in order to suck trash. Thus, the user approaches the operation part 139 by groping. In the suction operation state, only the slide operation with respect to the bottom surface 147A of the solid portion 147 with the thumb is determined as a valid operation. An operation with respect to the operation buttons 148 and 149 in the suction operation state is determined as an invalid operation. The operation with respect to the operation buttons 148 and 149 is determined as a valid operation in the standby state.

The specific part is set as the bottom surface 147A of the solid portion 147. The slide operation is set as the slide operation with respect to the bottom surface 147A with the thumb. Only this slide operation is set as a valid operation in the suction operation state. Thus, the solid portion 147 can be easily found without taking eyes away from the suction head 138. The suction level or the operation mode can be simply switched without erroneous operations.

In each embodiment described above, for example, hardware structures of processing units executing various processes like the console device control parts 15 and 125, the touch panel control part 60, the touchpad control part 61, the touch panel control part 126, the voice output control part 62, the AP interface part 63, the OS processing part 70, the AP execution part 71, the operation recognition part 75, and the operation validity determination part 76 correspond to various processors as follows.

The various processors include a CPU, a programmable logic device (PLD), a dedicated electric circuit, and the like. The CPU is a versatile processor functioning as various processing units by executing software (program) as previously known. The PLD is a processor such as a field programmable gate array (FPGA) capable of changing a circuit configuration after manufacturing. The dedicated electric circuit is a processor having a circuit configuration such as an application specific integrated circuit (ASIC) dedicatedly designed to execute a specific process.

One processing unit may be configured to include one of the various processors or may be configured to include a combination of two or more processors of the same kind or different kinds (for example, a plurality of FPGAs or a combination of the CPU and the FPGA). In addition, a plurality of processing units may be configured to include one processor. A first example of configuring a plurality of processing units with one processor is such that one processor is configured to include a combination of one or more CPUs and software, and the processor functions as a plurality of processing units. A second example is such that as represented by a system on chip (SoC) or the like, a processor that implements the function of the whole system including the plurality of processing units using one IC is used. Various processing units are configured using one or more of the various processors as a hardware structure.

Furthermore, the hardware structure of the various processors is more specifically circuitry in which circuit elements such as a semiconductor element are combined.

A touch type operation apparatus disclosed in Appendix 1 below can be perceived from the above disclosure.

### [Appendix 1]

A touch type operation apparatus comprising a touch sensor that includes an operation region in which a user performs a gesture operation by bringing a finger into contact with and a recessed solid portion and/or a protruding solid portion sensed by the contact with the finger is disposed in the operation region, an operation recognition processor that recognizes the gesture operation performed on the operation region, and an operation validity determination processor that determines whether or not the gesture operation recognized by the operation recognition processor is a valid operation and determines the gesture operation as the valid operation only in a case where the gesture operation is a slide operation with the finger along a specific part of the solid portion while a mounting apparatus is in a specific operation state.

The present invention is not limited to each embodiment described above and may employ various configurations without departing from the nature of the present invention. In addition, the above various embodiments and various modification examples can be appropriately combined. In addition, the present invention includes a program and a storage medium storing the program.

## Claims

1. A touch type operation apparatus comprising:
a touch sensor that includes an operation region in which a user performs a gesture operation by bringing a finger into contact with and a recessed solid portion and/or a protruding solid portion sensed by the contact with the finger is disposed in the operation region;
an operation recognition part that recognizes the gesture operation performed on the operation region; and
an operation validity determination part that determines whether or not the gesture operation recognized by the operation recognition part is a valid operation and determines the gesture operation as the valid operation only in a case where the gesture operation is a slide operation with the finger along a specific part of the solid portion while a mounting apparatus is in a specific operation state.

2. The touch type operation apparatus according to claim 1,
wherein an operation lock of the touch sensor is released in response to the slide operation.

3. The touch type operation apparatus according to claim 1 or 2,
wherein the operation region is configured to include a flat surface portion and the recessed solid portion recessed from the flat surface portion and/or the protruding solid portion protruding from the flat surface portion.

4. The touch type operation apparatus according to claim 3,
wherein the specific part corresponds to an opening periphery of the recessed solid portion that is a boundary between the flat surface portion and the recessed solid portion and/or a recessed surface of the recessed solid portion.

5. The touch type operation apparatus according to claim 3 or 4,
wherein the specific part corresponds to a lower periphery of the protruding solid portion that is a boundary between the flat surface portion and the protruding solid portion and/or in a case where the protruding solid portion has an upper surface, a periphery of the upper surface.

6. The touch type operation apparatus according to any one of claims 3 to 5,
wherein the recessed solid portion includes a plurality of finger holes in which a plurality of the fingers are respectively inserted and a plurality of guide grooves guiding the plurality of fingers to the plurality of finger holes, respectively, and
the specific part corresponds to recessed surfaces forming the guide grooves.

7. The touch type operation apparatus according to claim 6,
wherein a function executed in the mounting apparatus is changed depending on the number or positions of the finger holes in which the fingers are inserted.

8. The touch type operation apparatus according to any one of claims 3 to 7,
wherein the solid portion has any shape of a spherical shape, a columnar shape, or a frustum shape.

9. The touch type operation apparatus according to any one of claims 1 to 8, further comprising:
a voice output control part that performs control for outputting a notification voice with respect to the gesture operation from a speaker.

10. The touch type operation apparatus according to any one of claims 1 to 9,
wherein the touch sensor is a touch panel display of which at least a part is transparent and which has a display function in the transparent part.

11. The touch type operation apparatus according to any one of claims 1 to 10,
wherein the mounting apparatus is an automobile.

12. The touch type operation apparatus according to claim 11,
wherein the specific operation state is a state of manual driving where a driver sitting in a driver's seat of the automobile travels by manually operating a steering wheel.

13. The touch type operation apparatus according to claim 11 or 12,
wherein a function executed in the automobile is a function related to at least one of car navigation, car air conditioning, or car audio.

14. An operation method of a touch type operation apparatus comprising a touch sensor that includes an operation region in which a user performs a gesture operation by bringing a finger into contact with and a recessed solid portion and/or a protruding solid portion sensed by the contact with the finger is disposed in the operation region, the method comprising:
an operation recognition step of recognizing the gesture operation performed on the operation region; and
an operation validity determination step of determining whether or not the gesture operation recognized in the operation recognition step is a valid operation and determining the gesture operation as the valid operation only in a case where the gesture operation is a slide operation with the finger along a specific part of the solid portion while a mounting apparatus is in a specific operation state.

15. An operation program of a touch type operation apparatus comprising a touch sensor that includes an operation region in which a user performs a gesture operation by bringing a finger into contact with and a recessed solid portion and/or a protruding solid portion sensed by the contact with the finger is disposed in the operation region, the program causing a computer to execute:
an operation recognition function of recognizing the gesture operation performed on the operation region; and
an operation validity determination function of determining whether or not the gesture operation recognized by the operation recognition function is a valid operation and determining the gesture operation as the valid operation only in a case where the gesture operation is a slide operation with the finger along a specific part of the solid portion while a mounting apparatus is in a specific operation state.
